# EUROPEAN PATENT APPLICATION

(11) **EP 4 510 542 A1**
(43) Date of publication of application: **19.02.2025**
(21) Application number: 22941519.5
(22) Date of filing: 09.12.2022
(51) Int. Cl.: H04L 67/63, H04W 48/16

(54) **METHOD FOR OBTAINING APPLICATION-AWARE NETWORK IDENTIFIER AND RELATED DEVICE**

(30) Priority: 11.05.2022 CN 202210509688
(71) Applicant: Huawei Technologies Co., Ltd., Shenzhen, Guangdong 518129 (CN)
(72) Inventor: PENG, Shuping, Shenzhen, Guangdong 518129 (CN); CUI, Hongbin, Shenzhen, Guangdong 518129 (CN); HU, Xiaozheng, Shenzhen, Guangdong 518129 (CN)
(74) Representative: Körber, Martin Hans
(86) International application number: PCT/CN2022/137916
(87) International publication number: WO 2023/216584

(57) **Abstract**

This application provides a method for obtaining an application-aware networking identifier and a related device. The method includes: A second device configured to manage an application-aware networking identifier resource sends a first message to a first device, where the first message includes a first application-aware networking identifier. After receiving the first message, the first device includes the first application-aware networking identifier in a sent first packet, to indicate application information to which the first packet belongs. In this way, the first device can simply and conveniently obtain an application-aware network, and include a corresponding application-aware network identifier in a to-be-sent packet, so that a network can perceive, based on the application-aware networking identifier, an application or a host from which the packet comes, and pertinently process the packet in a manner in which a requirement of the application or the host on the network can be met, to provide a corresponding network service for the application or the host, thereby meeting the requirement of the application or the host on the network. This improves user experience brought by the application to a user.

## Description

This application claims priority to Chinese Patent Application No. 202210509688.0, filed with the China National Intellectual Property Administration on May 11, 2022 and entitled "METHOD FOR OBTAINING APPLICATION-AWARE NETWORKING IDENTIFIER AND RELATED DEVICE", which is incorporated herein by reference in its entirety.

### TECHNICAL FIELD

This application relates to the field of communication technologies, and in particular, to a method for obtaining an application-aware networking identifier and a related device.

### BACKGROUND

With development of communication technologies, emerging applications (Applications, APPs) bring convenience to user's work and life. Many applications run over the internet at the same time, and they have different requirements on a network bandwidth, a delay, jitter, a packet loss rate, and the like. For example, applications such as online video and game applications have high requirements on a network, while requirements of text applications on the network can be easily met.

In view of this, an application device or a network device may include an application-aware networking identifier in a packet, so that a network can perceive an application to which the packet belongs and a requirement of the application on the network, and pertinently process the packet, to provide a corresponding network service for the application, thereby meeting the requirement of the application on the network. This improves user experience brought by the application to a user. Therefore, how to easily and conveniently obtain an application-aware networking identifier becomes a key to implementing the foregoing solution.

### SUMMARY

In view of this, embodiments of this application provide a method for obtaining an application-aware networking identifier and a related device, to obtain the application-aware networking identifier more easily and conveniently, so as to prepare for perceiving, by a network, application information to which a packet belongs, and pertinently processing the packet.

According to a first aspect, this application provides a method for obtaining an application-aware networking identifier, applied to a first device. For example, the method may include: A second device configured to manage an application-aware networking identifier resource sends a first message to the first device, where the first message includes a first application-aware networking identifier, and the first application-aware networking identifier is an application-aware networking identifier in the application-aware networking identifier resource. In this case, after receiving the first message, the first device may include the first application-aware networking identifier in a sent first packet, to indicate application information to which the first packet belongs. In this way, through receiving an application-aware networking identifier sent by the second device that manages the application-aware networking identifier resource, the first device can simply and conveniently obtain the application-aware network, and include a corresponding application-aware network in a to-be-sent packet, so that a network can perceive, based on the application-aware networking identifier, an application or a host from which the packet comes, and pertinently process the packet in a manner in which a requirement of the application or the host on the network can be met, to provide a corresponding network service for the application or the host, thereby meeting the requirement of the application or the host on the network. This improves user experience brought by the application to a user.

In some implementations, the second device may actively send the first message to the first device. For example, the first device may be a dedicated device (for example, a video conference terminal), and the second device may know an application-aware networking identifier that needs to be obtained by the first device. In this case, the second device may actively include, in the first message, the application-aware networking identifier required by the first device, and send the first message to the first device, to implement a host-level or application-level application-aware networking (Application-aware Networking, APN) technology for the first device.

In some other implementations, after receiving a second message sent by the first device, the second device may send the first message to the first device in response to the second message. To be specific, before receiving, by the first device, the first message sent by the second device, the method may further include: The first device sends the second message to the second device, where the first message is a response message for the second message. In this way, the second device sends the response message including both content requested by the first device and a corresponding application-aware networking identifier to the first device, thereby providing convenience for the first device to obtain the application-aware networking identifier.

The following uses an implementation in which the first device first sends the second message to the second device and the first device receives the first message sent by the second device in response to the second message as an example for description.

In some implementations, the application information to which the first packet belongs reflects a first application to which the first packet belongs, that is, the first application-aware networking identifier may indicate the first application. The first application-aware networking identifier may be denoted as an application-aware networking identifier (Application-aware Networking identifier, APN ID) corresponding to the first application.

In this implementation, in an example, the first device may be an application device, the application device bears the first application, and the second device may be a domain name system (Domain Name System, DNS) server. In this case, the second message may carry a first domain name, the second message is used to request an internet protocol (Internet Protocol, IP) address of the first domain name, and the first application-aware networking identifier matches the first domain name. The first message further includes a first IP address, the first IP address matches the first domain name, the first packet is used to access the first domain name, and a destination address of the first packet is the first IP address. In other words, in this embodiment of this application, when an application of the application device sends a request message carrying the first domain name to the DNS server, to request the DNS server to feed back the IP address corresponding to the first domain name, the DNS server may determine the first IP address and the first APN ID that match the first domain name, and send a response message to the application of the application device, where the response message includes the first IP address and the first APN ID. The first APN ID indicates the application, the first APN ID is used to enable a network to perceive the application and a requirement of the application on the network, and the first IP address is used by the application to access the first domain name. In this way, after receiving a request message that is sent by an application and that is used to request an IP address of a domain name, the DNS server returns a response message including both an APN ID of the application and the requested IP address to the application, so that the application quickly and conveniently obtains the APN ID that can indicate the application and that is perceived by a network, and subsequently, a packet of the application can be perceived by the network and pertinently processed. This makes it possible to ensure a requirement of the application on the network.

In this example, in one case, the application device may be user equipment that bears the first application. In this case, for example, that the first device sends the first packet may include: The first device sends the first packet to an application server, where the application server is configured to provide a service for the first application. In this case, the method may further include: The first device receives a second packet sent by the application server, where the second packet carries a second application-aware networking identifier, and the second application-aware networking identifier indicates application information to which the second packet belongs. The second application-aware networking identifier may be the same as or different from the first application-aware networking identifier. If the second application-aware networking identifier is the same as the first application-aware networking identifier, the application server may obtain the first application-aware networking identifier from the first packet, and encapsulate the first application-aware networking identifier into a packet to be sent to the first application, to obtain the second packet. If the second application-aware networking identifier is different from the first application-aware networking identifier, the DNS server may further send the second application-aware networking identifier to the application server, for the application server to include the second application-aware networking identifier in a sent second packet, where the second application-aware networking identifier indicates application information to which the second packet belongs.

In another case, the application device may be an application server that provides a service for the first application. In this case, for example, that the first device sends the first packet may include: sending the first packet to user equipment, where the user equipment bears the first application.

In this implementation, in another example, the first device may alternatively be a network device, the first application accesses a network via the network device, and the second device is a dynamic host configuration protocol (Dynamic Host Configuration Protocol, DHCP) server. In this case, the second message may be used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic. The application-aware networking configuration information may be carried in an option (Option) field in the first message. For example, the application-aware networking configuration information may be carried in a type-length-value (Type-Length-Value, TLV) field in the option field in the first message. It can be learned that, in this embodiment, when the network device sends a request message to the DHCP server, to request a DHCP to allocate the IP address to the network device, the DHCP server may determine the first IP address allocated to the network device and first APN configuration information, and send a response message to the network device, where the response message includes the first IP address and the first APN configuration information. The first APN configuration information is used to enable the network device to include the first APN ID in traffic that is received from the first interface and that matches the first traffic characteristic, the first APN ID is used to enable the network to perceive a source of the traffic and a requirement of the traffic on the network, and the first IP address is used by the network device as an IP address for interacting with another device. In this way, after receiving a request message that is sent by the network device and that is used to request an IP address, the DHCP server returns a response message including both corresponding APN configuration information and the requested IP address to the network device, so that the network device quickly and conveniently obtains the APN configuration information that can indicate traffic that accesses a network via the network device and that is perceived by the network, and subsequently, a packet that matches the APN configuration information can be perceived by the network and pertinently processed. This makes it possible to ensure a requirement of the traffic on the network.

In this example, a process in which the first device obtains the sent first packet may include: The first device receives, from the first interface, a second packet corresponding to the first application, determines that a traffic characteristic of the second packet matches the first traffic characteristic, and encapsulates the first application-aware networking identifier into the second packet, to obtain the first packet.

In some other implementations, the application information to which the first packet belongs may alternatively reflect a first host to which the first packet belongs, and the first application-aware networking identifier is an APN ID corresponding to the first host. It can be learned that, when a host sends a request message to a DHCP server, to request a DHCP to allocate an IP address to the host, the DHCP server determines, based on a stored mapping relationship, a first IP address allocated to the host and a first APN ID, and sends a response message to the host, where the response message includes the first IP address and the first APN ID. The first APN ID indicates the host, the first APN ID is used to enable a network to perceive the host and a requirement of the host on the network, and the first IP address is used by the host as an IP address for interacting with another device. In this way, after receiving a request message that is sent by the host and that is used to request an IP address, the DHCP server returns a response message including both an APN ID of the host and the requested IP address to the host, so that the host quickly and conveniently obtains the APN ID that can indicate the host and is perceived by a network, and subsequently, a packet of the host can be perceived by the network and pertinently processed. This makes it possible to ensure a requirement of the host on the network.

In this implementation, in an example, the second device is a DHCP server, and the first device may be the first host. In this case, the second message is used to request the DHCP server to allocate an IP address to the first host. The first message further includes a first IP address, the first IP address is the IP address allocated by the DHCP server to the first host, and the first IP address matches the first application-aware networking identifier. The first application-aware networking identifier may be carried in an option field in the first message. For example, the first application-aware networking identifier may be carried in a TLV field in the option field in the first message.

In this example, that the first device sends the first packet may include: The first host sends the first packet to a second host, where a source IP address of the first packet is the first IP address. In this case, the method may further include: The first host receives a second packet sent by the second host, where the second packet includes a second application-aware networking identifier, and the second application-aware networking identifier indicates application information to which the second packet belongs. The second application-aware networking identifier may be the same as or different from the first application-aware networking identifier. If the second application-aware networking identifier is the same as the first application-aware networking identifier, the second host may obtain the first application-aware networking identifier from the first packet, and encapsulate the first application-aware networking identifier into a packet to be sent to the first host, to obtain the second packet. If the second application-aware networking identifier is different from the first application-aware networking identifier, the DHCP server may further send the second application-aware networking identifier to the second host, for the second host to include the second application-aware networking identifier in a sent second packet, where the second application-aware networking identifier indicates application information to which the second packet belongs.

In this implementation, in another example, the second device is a DHCP server, the first device may be a network device, and the first host accesses a network via the network device. In this case, the second message is used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic. It can be learned that, in this embodiment, when the network device sends a request message to the DHCP server, to request a DHCP to allocate the IP address to the network device, the DHCP server may determine the first IP address allocated to the network device and first APN configuration information, and send a response message to the network device, where the response message includes the first IP address and the first APN configuration information. The first APN configuration information is used to enable the network device to include the first APN ID in traffic that is received from the first interface and that matches the first traffic characteristic, the first APN ID is used to enable the network to perceive a source of the traffic and a requirement of the traffic on the network, and the first IP address is used by the network device as an IP address for interacting with another device. In this way, after receiving a request message that is sent by the network device and that is used to request an IP address, the DHCP server returns a response message including both corresponding APN configuration information and the requested IP address to the network device, so that the network device quickly and conveniently obtains the APN configuration information that can indicate traffic that accesses a network via the network device and that is perceived by the network, and subsequently, a packet that matches the APN configuration information can be perceived by the network and pertinently processed. This makes it possible to ensure a requirement of the traffic on the network.

In this example, a process in which the first device obtains the sent first packet may include: The first device receives, from the first interface, a second packet corresponding to the first host, and determines that a traffic characteristic of the second packet matches the first traffic characteristic, and the first device encapsulates the first application-aware networking identifier into the second packet, to obtain the first packet.

In some implementations, the first application-aware networking identifier may be carried in an internet protocol version 6 (Internet Protocol version 6, IPv6) packet header or an IPv6 extension header of the first packet.

In some implementations, to ensure security of the obtained first application-aware networking identifier, a key corresponding to the first application-aware networking identifier may be further obtained. The key may be a symmetric key of hash-based message authentication code (Hash-based Message Authentication Code, HMAC), or may be a private key or a public key of a digital signature. Based on different key types and security technologies, verifications on the first application-aware networking identifier are also different. For example, whether the first application-aware networking identifier is anti-tampered or complete may be verified. In an example, the second device may send the first message including the key together with the first application-aware networking identifier to the first device. Alternatively, in another example, the second device may send another message including the key to the first device. However, in this implementation, indication information further needs to be included in the message carrying the key, to indicate that the key is used to verify the first application-aware networking identifier.

If the first device obtains the first application-aware networking identifier and the key, in one aspect, before the first device sends the first message, the first device may verify the first application-aware networking identifier based on the obtained key. If the verification succeeds, it may be determined that the obtained first application-aware networking identifier is secure, and an operation of sending, by the first device, the first packet carrying the first application-aware networking identifier is performed. Otherwise, it may be determined that the obtained first application-aware networking identifier is not secure, and the first packet carrying the first application-aware networking identifier may not be sent. In another aspect, the first application-aware networking identifier and the key may be encapsulated into the first packet, so that a device receiving the first packet may verify the security of the first application-aware networking identifier in the first packet based on the key. If it is determined, through verification, that the first application-aware networking identifier is not tampered with in a process of transmitting the first packet, it is determined that the first application-aware networking identifier is secure, and the first packet may be pertinently processed based on the first application-aware networking identifier. Otherwise, it may be determined that the first application-aware networking identifier is not secure enough, and the first packet may not be processed based on the first application-aware networking identifier. For example, the first packet may be discarded.

An APN ID includes at least one of the following information: an application identifier (APP GROUP ID), a user group identifier (USER GROUP ID), a flow identifier (FLOW ID), or a service level agreement (Service Level Agreement, SLA). Both a host level and an application level may be represented by some or all of the foregoing information, or may be represented by other information. This is not limited in this application.

According to a second aspect, this application further provides a method for obtaining an application-aware networking identifier, applied to a second device. The second device is configured to manage an application-aware networking identifier resource. For example, the method may include: The second device obtains a first application-aware networking identifier from the application-aware networking identifier resource. Therefore, the second device sends a first message including the first application-aware networking identifier to a first device, for the first device to include the first application-aware networking identifier in a sent first packet, where the first application-aware networking identifier indicates application information to which the first packet belongs. In this way, through receiving an application-aware networking identifier sent by the second device that manages the application-aware networking identifier resource, the first device can simply and conveniently obtain the application-aware network, and include a corresponding application-aware network in a to-be-sent packet, so that a network can perceive, based on the application-aware networking identifier, an application or a host from which the packet comes, and pertinently process the packet in a manner in which a requirement of the application or the host on the network can be met, to provide a corresponding network service for the application or the host, thereby meeting the requirement of the application or the host on the network. This improves user experience brought by the application to a user.

In some implementations, before the first message including the first application-aware networking identifier is sent to the first device, the method may further include: receiving a second message sent by the first device, where the first message is a response message for the second message.

In some implementations, the application information to which the first packet belongs reflects a first application to which the first packet belongs. The first application-aware networking identifier is an APN ID corresponding to the first application, and the APN ID may include, for example, at least one of the following information: an APP GROUP ID, a USER GROUP ID, a FLOW ID, or an SLA.

In an example, the second device may be a DNS server, the first device is an application device, and the application device bears the first application. In this case, the second message carries a first domain name, and the second message is used to request an internet protocol IP address of the first domain name. A process of obtaining the first message sent by the second device in the method may include: The second device obtains, from an A record, a first IP address matching the first domain name, obtains, from a TXT record, the first application-aware networking identifier matching the first domain name, and generates the first message, where the first message includes the first application-aware networking identifier and the first IP address.

In one case, the application device may be user equipment that bears the first application. The method may further include: sending a second application-aware networking identifier to an application server, where the application server is configured to provide a service for the first application, for the application server to include the second application-aware networking identifier in a sent second packet, and the second application-aware networking identifier indicates application information to which the second packet belongs.

In another case, the application device may be an application server that provides a service for the first application.

In another example, the second device may be a DHCP server, the first device is a network device, and the first application accesses a network via the network device. In this case, the second message is used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic. The application-aware networking configuration information may be carried in an option field in the first message.

In some implementations, the application information to which the first packet belongs reflects a first host to which the first packet belongs, and the first application-aware networking identifier is an APN ID corresponding to the first host.

In an example, the second device may be a DHCP server, and the first device is the first host. In this case, the second message is used to request the DHCP server to allocate an IP address to the first host. The first message further includes a first IP address, the first IP address is the IP address allocated by the DHCP server to the first host, and the first IP address matches the first application-aware networking identifier. The first application-aware networking identifier is carried in an option (Option) field in the first message.

In this example, the method may further include: sending a second application-aware networking identifier to a second host, for the second host to include the second application-aware networking identifier in a sent second packet, where the second application-aware networking identifier indicates application information to which the second packet belongs. The second application-aware networking identifier may be the same as or different from the first application-aware networking identifier.

In another example, the second device may be a DHCP server, the first device is a network device, and the first host accesses a network via the network device. In this case, the second message is used to request the DHCP server to allocate an IP address to the network device. The first message further includes a first IP address, the first IP address corresponds to application-aware networking configuration information, the application-aware networking configuration information includes a correspondence among the first application-aware networking identifier, a first interface, and a first traffic characteristic, and the application-aware networking configuration information indicates the network device to encapsulate the first application-aware networking identifier into traffic that is received from the interface and whose traffic characteristic matches the first traffic characteristic. The application-aware networking configuration information may be carried in an option (Option) field in the first message.

The first message may further include a key, and the key is used to verify whether the first application-aware networking identifier is tampered with.

It should be noted that, for specific implementations and achieved technical effects of the method according to the second aspect, refer to the related descriptions of the first aspect.

According to a third aspect, this application further provides an apparatus for obtaining an application-aware networking identifier. The apparatus is used in a first device, and the apparatus may include, for example, a receiving unit and a sending unit. The receiving unit is configured to receive a first message sent by a second device, where the first message includes a first application-aware networking identifier, and the second device is configured to manage an application-aware networking identifier resource. The sending unit is configured to send a first packet, where the first packet carries the first application-aware networking identifier, and the first application-aware networking identifier indicates application information to which the first packet belongs.

In some implementations, the sending unit is further configured to: before the first message sent by the second device is received, send a second message to the second device, where the first message is a response message for the second message.

In some implementations, the application information to which the first packet belongs reflects a first application to which the first packet belongs.

The first application-aware networking identifier is an APN ID corresponding to the first application, and the APN ID includes at least one of the following information: an APP GROUP ID, a USER GROUP ID, a FLOW ID, or an SLA.

In an example, the first device is an application device, the application device bears the first application, and the second device is a DNS server. In this case, the second message carries a first domain name, the second message is used to request an internet protocol IP address of the first domain name, and the first application-aware networking identifier matches the first domain name. The first message further includes a first IP address, the first IP address matches the first domain name, the first packet is used to access the first domain name, and a destination address of the first packet is the first IP address.

In one case, the application device is user equipment that bears the first application. In this case, the sending unit is specifically configured to send the first packet to an application server, where the application server is configured to provide a service for the first application. In this case, the receiving unit is further configured to receive a second packet sent by the application server, where the second packet carries a second application-aware networking identifier, and the second application-aware networking identifier indicates application information to which the second packet belongs. The second application-aware networking identifier is the same as the first application-aware networking identifier.

In another case, the application device is an application server that provides a service for the first application. In this case, the sending unit is specifically configured to send the first packet to user equipment, where the user equipment bears the first application.

In another example, the first device is a network device, the first application accesses a network via the network device, and the second device is a DHCP server. In this case, the second message is used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic. In this example, the apparatus may further include a processing unit. The receiving unit is further configured to receive, from the first interface, a second packet corresponding to the first application. The processing unit is configured to: determine that a traffic characteristic of the second packet matches the first traffic characteristic, and encapsulate the first application-aware networking identifier into the second packet, to obtain the first packet.

In some other implementations, the application information to which the first packet belongs reflects a first host to which the first packet belongs, and the first application-aware networking identifier is an APN ID corresponding to the first host.

In an example, the second device is a DHCP server, and the first device is the first host. In this case, the second message is used to request the DHCP server to allocate an IP address to the first host. The first message further includes a first IP address, the first IP address is the IP address allocated by the DHCP server to the first host, and the first IP address matches the first application-aware networking identifier.

In this example, the sending unit is specifically configured to send the first packet to a second host, where a source IP address of the first packet is the first IP address. In this case, the receiving unit is further configured to receive a second packet sent by the second host, where the second packet includes a second application-aware networking identifier, and the second application-aware networking identifier indicates application information to which the second packet belongs. The second application-aware networking identifier may be the same as the first application-aware networking identifier.

In another example, the second device is a DHCP server, the first device is a network device, and the first host accesses a network via the network device. In this case, the second message is used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic.

In this example, the apparatus may further include a processing unit. The receiving unit is specifically configured to receive, from the first interface, a second packet corresponding to the first host. The processing unit is configured to: determine that a traffic characteristic of the second packet matches the first traffic characteristic, and encapsulate the first application-aware networking identifier into the second packet, to obtain the first packet.

In some implementations, the first application-aware networking identifier is carried in an IPv6 packet header or an IPv6 extension header of the first packet.

In some implementations, the first message may further include a key. The apparatus may further include a verification unit. The verification unit is configured to verify, based on the key, whether the first application-aware networking identifier is tampered with.

It should be noted that the apparatus for obtaining an application-aware networking identifier according to the third aspect is configured to perform related operations mentioned in the first aspect. For specific implementations and achieved effects of the apparatus, refer to the related descriptions in the first aspect. Details are not described herein again.

According to a fourth aspect, this application further provides an apparatus for obtaining an application-aware networking identifier. The apparatus is used in a second device. The second device is configured to manage an application-aware networking identifier resource. The apparatus may include a processing unit and a sending unit. The processing unit is configured to obtain a first application-aware networking identifier from the application-aware networking identifier resource. The sending unit is configured to send a first message including the first application-aware networking identifier to a first device, for the first device to include the first application-aware networking identifier in a sent first packet, where the first application-aware networking identifier indicates application information to which the first packet belongs.

In some implementations, the apparatus may further include a receiving unit. The receiving unit is configured to: before the first message including the first application-aware networking identifier is sent to the first device, receive a second message sent by the first device, where the first message is a response message for the second message.

In some implementations, the application information to which the first packet belongs reflects a first application to which the first packet belongs.

The first application-aware networking identifier is an APN ID corresponding to the first application, and the APN ID includes at least one of the following information: an APP GROUP ID, a USER GROUP ID, a FLOW ID, or an SLA.

In an example, the second device is a DNS server, the first device is an application device, and the application device bears the first application. In this case, the second message carries a first domain name, and the second message is used to request an IP address of the first domain name. The processing unit is further configured to: obtain, from an A record, a first IP address matching the first domain name, obtain, from a TXT record, the first application-aware networking identifier matching the first domain name, and generate the first message, where the first message includes the first application-aware networking identifier and the first IP address.

In one case, the application device is user equipment that bears the first application. The sending unit is further configured to: send a second application-aware networking identifier to an application server, where the application server is configured to provide a service for the first application, for the application server to include the second application-aware networking identifier in a sent second packet, and the second application-aware networking identifier indicates application information to which the second packet belongs.

In another case, the application device is an application server that provides a service for the first application.

In another example, the second device is a DHCP server, the first device is a network device, and the first application accesses a network via the network device. In this case, the second message is used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic. The application-aware networking configuration information may be carried in an option field in the first message.

In some implementations, the application information to which the first packet belongs reflects a first host to which the first packet belongs, and the first application-aware networking identifier is an APN ID corresponding to the first host.

In an example, the second device is a DHCP server, and the first device is the first host. In this case, the second message is used to request the DHCP server to allocate an IP address to the first host. The first message further includes a first IP address, the first IP address is the IP address allocated by the DHCP server to the first host, and the first IP address matches the first application-aware networking identifier.

In this example, the sending unit is further configured to send a second application-aware networking identifier to a second host, for the second host to include the second application-aware networking identifier in a sent second packet, where the second application-aware networking identifier indicates application information to which the second packet belongs. The second application-aware networking identifier may be the same as the first application-aware networking identifier.

The first application-aware networking identifier may be carried in an option field in the first message.

In another example, the second device is a DHCP server, the first device is a network device, and the first host accesses a network via the network device. In this case, the second message is used to request the DHCP server to allocate an IP address to the network device. The first message further includes a first IP address, the first IP address corresponds to application-aware networking configuration information, the application-aware networking configuration information includes a correspondence among the first application-aware networking identifier, a first interface, and a first traffic characteristic, and the application-aware networking configuration information indicates the network device to encapsulate the first application-aware networking identifier into traffic that is received from the interface and whose traffic characteristic matches the first traffic characteristic.

The application-aware networking configuration information may be carried in an option field in the first message.

In some implementations, the first message further includes a key, and the key is used to verify whether the first application-aware networking identifier is tampered with.

It should be noted that the apparatus for obtaining an application-aware networking identifier according to the fourth aspect is configured to perform related operations mentioned in the second aspect. For specific implementations and achieved effects of the apparatus, refer to the related descriptions in the second aspect. Details are not described herein again.

According to a fifth aspect, this application further provides a first device. The first device includes a processor and a memory. The memory is configured to store instructions or a computer program. The processor is configured to execute the instructions or the computer program in the memory, so that the first device performs the method according to any one of the possible implementations of the first aspect.

According to a sixth aspect, this application further provides a second device. The second device includes a processor and a memory. The memory is configured to store instructions or a computer program. The processor is configured to execute the instructions or the computer program in the memory, so that the second device performs the method according to any one of the possible implementations of the second aspect.

According to a seventh aspect, an embodiment of this application further provides a communication system. The communication system includes a first device and a second device.

The first device is configured to perform the method according to any one of the possible implementations of the first aspect.

The second device is configured to perform the method according to any one of the possible implementations of the second aspect.

Alternatively, it may be understood as that the communication system includes the apparatus for obtaining an application-aware networking identifier according to the third aspect and the apparatus for obtaining an application-aware networking identifier according to the fourth aspect.

Alternatively, it may be understood as that the communication system includes the first device according to the fifth aspect and the second device according to the sixth aspect.

According to an eighth aspect, an embodiment of this application further provides a computer-readable storage medium. The computer-readable storage medium stores program code or instructions. When the program code or the instructions are run on a computer, the computer is enabled to perform the method according to any one of the possible implementations of the first aspect or the second aspect.

According to a ninth aspect, an embodiment of this application further provides a computer program product. When the computer program product runs on a network device, the network device is enabled to perform the method according to any one of the possible implementations of the first aspect or the second aspect.

According to a tenth aspect, this application provides a chip, including a memory and a processor. The memory is configured to store a computer program, and the processor is configured to invoke the computer program from the memory and run the computer program, to perform the method according to any one of the possible implementations of the first aspect or the second aspect.

Optionally, the chip includes only a processor. The processor is configured to read and execute a computer program stored in a memory. When the computer program is executed, the processor performs the method according to any one of the possible implementations of the first aspect or the second aspect.

### BRIEF DESCRIPTION OF DRAWINGS

FIG. 1 is a schematic flowchart of a method for obtaining an APN ID according to this application;
FIG. 2 is a diagram of a structure of a scenario to which a method 100 is applicable according to this application;
FIG. 3A to FIG. 3C are a schematic flowchart of a method 100 for obtaining an APN ID according to this application;
FIG. 4 is a schematic flowchart of an APN6 solution including a method 100 according to this application;
FIG. 5 is a diagram of a structure of a scenario to which a method 200 is applicable according to this application;
FIG. 6A to FIG. 6C are a schematic flowchart of a method 200 for obtaining an APN ID according to this application;
FIG. 7 is a schematic flowchart of an APN6 solution including a method 200 according to this application;
FIG. 8 is a diagram of a structure of a scenario to which a method 300 is applicable according to this application;
FIG. 9A to FIG. 9C are a schematic flowchart of a method 300 for obtaining an APN ID according to this application;
FIG. 10 is a schematic flowchart of an APN6 solution including a method 300 according to this application;
FIG. 11 is a diagram of a structure of an apparatus 1100 for obtaining an APN ID according to this application;
FIG. 12 is a diagram of a structure of an apparatus 1200 for obtaining an APN ID according to this application;
FIG. 13 is a diagram of a structure of a network device 1300 or a communication device 1300 according to this application;
FIG. 14 is a diagram of a structure of a network device 1400 or a communication device 1400 according to this application; and
FIG. 15 is a diagram of a structure of a network system 1500 according to this application.

### DESCRIPTION OF EMBODIMENTS

The following describes technical solutions in embodiments of this application with reference to accompanying drawings. A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to similar technical problems.

Ordinal numbers such as "1", "2", "3", "first", "second", and "third" in embodiments of this application are used to distinguish between a plurality of objects, but are not used to limit a sequence of the plurality of objects.

"A and/or B" mentioned in embodiments of this application should be understood as including the following cases: Only A is included, only B is included, or both A and B are included.

It should be noted that, in embodiments of this application, the "application" and the "application program" may indicate a same meaning, and both refer to a unit that is installed on an application device and that can provide a service for a user.

An application-aware internet protocol version 6 networking (Application-aware Internet Protocol version 6 Networking, APN6) technology makes full use of programmable space of internet protocol version 6 (Internet Protocol version 6, IPv6) or segment routing-internet protocol version 6 (Segment Routing-Internet Protocol version 6, SRv6), and application layer information is carried into a network, so that the network perceives a requirement of an application on the network. Application-level service level agreement (Service Level Agreement, SLA) assurance is provided for an application through resource scheduling or the like. Therefore, the APN6 technology is widely favored. For the APN6 technology, a key to implementation lies in how to enable a host, an application of an application device, or a network device (the network device may be, for example, a gateway connected to the application device or the host) in a network to be perceived by the network, that is, how to enable a host, an application of an application device, or a network device in a network to obtain an application-aware networking identifier that can be recognized by the network becomes a key of embodiments of this application.

In view of this, embodiments of this application provide a method for obtaining an application-aware networking identifier, so that a first device (for example, an application of an application device, a host, or a network device (the network device may be, for example, a gateway device connected to the application device or the host)) obtains an application-aware networking identifier more conveniently. Specifically, a second device configured to manage an application-aware networking identifier resource may send a first message to the first device, where the first message carries a first application-aware networking identifier. In this way, after receiving the first message, the first device may send a first packet carrying the first application-aware networking identifier. The first application-aware networking identifier indicates application information to which the first packet belongs. Therefore, a network can perceive, based on the first application-aware networking identifier, an application or a host from which the packet comes, and pertinently process the packet based on a requirement of the application or the host on the network, to meet the requirement of the application or the host on the network.

The application-aware networking identifier may be denoted as an APN ID (Application-aware Networking identifier). The following uses an example in which the application-aware networking identifier is denoted as the APN ID for description. A location at which the APN ID appears may be replaced with the application-aware networking identifier for understanding. In one case, the application-aware networking identifier may be an application-level APN ID. In this case, application information to which a packet indicated by the application-aware networking identifier belongs reflects an application to which the packet belongs. For example, an application-level APN ID may be used as a whole identifier, or may be used as a segment identifier. The segment identifier may include but is not limited to one or more of the following information: an application group identifier (APP GROUP ID), a user group identifier (USER GROUP ID), a flow identifier (FLOW ID), or a service level agreement (Service Level Agreement, SLA). In addition, in some cases, an application-aware networking parameter (APN Parameter) may be combined with an APN ID for carrying. In another case, the application-aware networking identifier may be a host-level APN ID. In this case, application information to which a packet indicated by the application-aware networking identifier belongs reflects a host to which the packet belongs, and the application-aware networking identifier is an APN ID corresponding to the host.

For the operation that the second device sends the first message including the first application-aware networking identifier to the first device, in one case, the second device may actively send the first message to the first device. For example, the first device may be a dedicated device (for example, a video conference terminal), and the second device may determine the first application-aware networking identifier that needs to be delivered to the first device, so that the second device can actively send, to the first device without requiring the first device to request the application-aware networking identifier from the second device, the first message that carries the first application-aware networking identifier. In another case, the first message may be a response message for a second message, that is, before the second device sends the first message to the first device, the second device receives the second message sent by the first device, and the second message is a request message. Therefore, the second device generates the response message (namely, the first message) for the second message, and the second device sends, to the first device in response to the second message, the first message that carries the first application-aware networking identifier. In the following description, an example in which the second device sends the response message for the request message to the first device after receiving the request message sent by the first device, where the response message includes the first application-aware networking identifier is used. The request message may be understood as the foregoing second message, and the response message may be understood as the foregoing first message.

Optionally, to ensure security of the obtained first application-aware networking identifier, a key corresponding to the first application-aware networking identifier may be further obtained. Based on different key types and security technologies, the first application-aware networking identifier is verified. For example, whether the first application-aware networking identifier is anti-tampered or complete may be verified. In an example, the second device may send the response message including the key together with the first application-aware networking identifier to the first device. Alternatively, in another example, the second device may send another message including the key to the first device. However, in this implementation, indication information further needs to be included in the message carrying the key, to indicate that the key is used to verify the first application-aware networking identifier.

In one case, before sending the first packet, the first device may verify the first application-aware networking identifier based on the obtained key. If the verification succeeds, it may be determined that the obtained first application-aware networking identifier is secure, and sending the first packet is performed. Otherwise, it may be determined that the obtained first application-aware networking identifier is not secure, and sending the first packet may not be performed.

In another case, after obtaining the first application-aware networking identifier and the key, the first device may further encapsulate the first application-aware networking identifier and the key into a to-be-sent first packet, so that a device receiving the first packet may verify the security of the first application-aware networking identifier in the first packet based on the key. If it is determined, through verification, that the first application-aware networking identifier is not tampered with in a process of transmitting the first packet, it is determined that the first application-aware networking identifier is secure, and the first packet may be pertinently processed based on the first application-aware networking identifier. Otherwise, it may be determined that the first application-aware networking identifier is not secure enough, and the first packet may not be processed based on the first application-aware networking identifier.

In a first possible implementation, for an application-level APN ID, that is, a scenario in which an APN ID identifies an application, the application may obtain the APN ID of the application by receiving a message that is sent by a domain name system (Domain Name System, DNS) server and that carries an IP address corresponding to a domain name. During specific implementation, the DNS server locally stores a mapping relationship. The mapping relationship not only includes a correspondence between a domain name and an internet protocol (Internet Protocol, IP) address, but also includes a correspondence between the domain name (or the IP address) and an APN ID. In this case, when an application of an application device sends a request message carrying a first domain name to the DNS server, to request the DNS server to feed back an IP address corresponding to the first domain name, the DNS server determines, based on the stored mapping relationship, a first IP address and a first APN ID that match the first domain name, and sends a response message to the application of the application device, where the response message includes the first IP address and the first APN ID. The first APN ID indicates the application, the first APN ID is used to enable a network to perceive the application and a requirement of the application on the network, and the first IP address is used by the application to access the first domain name. In this way, after receiving a request message that is sent by an application and that is used to request an IP address of a domain name, the DNS server returns a response message including both an APN ID of the application and the requested IP address to the application, so that the application quickly and conveniently obtains the APN ID that can indicate the application and that is perceived by a network, and subsequently, a packet of the application can be perceived by the network and pertinently processed. This makes it possible to ensure a requirement of the application on the network.

In an example, this implementation may further include: A network device in the network accessed by the application device obtains a correspondence between an APN ID and an assurance policy, and processes, according to the assurance policy, a packet carrying the APN ID, to meet a requirement of an application indicated by the APN ID on the network. The assurance policy may be, for example, a forwarding path. The correspondence between the APN ID and the assurance policy may include a correspondence between the first APN ID and a first assurance policy. In this way, the application of the application device sends a packet carrying the first APN ID to the network device, and the network device may determine, based on the first APN ID in the packet, the first assurance policy corresponding to the first APN ID, to process the packet according to the first assurance policy, so as to meet a requirement of the application indicated by the first APN ID for network.

In a second possible implementation, for a host-level APN ID, that is, a scenario in which an APN ID identifies a host, the host may obtain the APN ID of the host by receiving a message that is sent by a dynamic host configuration protocol (Dynamic Host Configuration Protocol, DHCP) server and that is used to allocate an IP address. During specific implementation, the DHCP server locally stores a mapping relationship. The mapping relationship includes a mapping relationship between an IP address allocated to the host and an APN ID. In this case, when the host sends a request message to the DHCP server, to request a DHCP to allocate an IP address to the host, the DHCP server determines, based on the stored mapping relationship, a first IP address allocated to the host and a first APN ID, and sends a response message to the host, where the response message includes the first IP address and the first APN ID. The first APN ID indicates the host, the first APN ID is used to enable a network to perceive the host and a requirement of the host on the network, and the first IP address is used by the host as an IP address for interacting with another device. In this way, after receiving a request message that is sent by the host and that is used to request an IP address, the DHCP server returns a response message including both an APN ID of the host and the requested IP address to the host, so that the host quickly and conveniently obtains the APN ID that can indicate the host and is perceived by a network, and subsequently, a packet of the host can be perceived by the network and pertinently processed. This makes it possible to ensure a requirement of the host on the network.

In an example, this implementation may further include: A network device in the network accessed by the host obtains a correspondence between an APN ID and an assurance policy, and processes, according to the assurance policy, a packet carrying the APN ID, to meet a requirement of the host indicated by the APN ID on the network. The assurance policy may be, for example, a forwarding path. The correspondence between the APN ID and the assurance policy may include a correspondence between the first APN ID and a first assurance policy. In this way, the host sends a packet carrying the first APN ID to the network device, and the network device may determine, based on the first APN ID in the packet, the first assurance policy corresponding to the first APN ID, to process the packet according to the first assurance policy, so as to meet a requirement of the host indicated by the first APN ID on the network.

In a third possible implementation, to enable a host (or an application) not to change a sent packet, a network may still perceive a requirement of traffic on the network, and a network device (for example, a gateway) in the network accessed by the host (or an application device in which the application is located) identifies and encapsulates a host-level (or application-level) APN ID. Specifically, the network device obtains, from a received message that is sent by a DHCP server and that is used to allocate an IP address, APN configuration information of a host (or an application) that accesses the network via the network device, and the network device identifies traffic and marks the traffic with an APN ID. During specific implementation, the DHCP server locally stores a mapping relationship. The mapping relationship includes a correspondence between an IP address allocated to the network device and APN configuration information, and the APN configuration information includes correspondences among multiple groups of interfaces, traffic characteristics, and APN IDs. In this case, when the network device sends a request message to the DHCP server, to request a DHCP to allocate the IP address to the network device, the DHCP server determines, based on the stored mapping relationship, a first IP address allocated to the network device and first APN configuration information, and sends a response message to the network device, where the response message includes the first IP address and the first APN configuration information. The first APN configuration information is used to enable the network device to include a first APN ID in traffic that is received from a first interface and that matches a first traffic characteristic, the first APN ID is used to enable the network to perceive a source of the traffic and a requirement of the traffic on the network, and the first IP address is used by the network device as an IP address for interacting with another device. In this way, after receiving a request message that is sent by the network device and that is used to request an IP address, the DHCP server returns a response message including both corresponding APN configuration information and the requested IP address to the network device, so that the network device quickly and conveniently obtains the APN configuration information that can indicate traffic that accesses a network via the network device and that is perceived by the network, and subsequently, a packet that matches the APN configuration information can be perceived by the network and pertinently processed. This makes it possible to ensure a requirement of the traffic on the network.

In an example, this implementation may further include: A network device in the network accessed by the host (or the application device corresponding to the application) obtains a correspondence between an APN ID and an assurance policy, and processes, according to the assurance policy, a packet carrying the APN ID, to meet a requirement of the host indicated by the APN ID on the network. The assurance policy may be, for example, a forwarding path. The network device that obtains the correspondence between the APN ID and the assurance policy may be the same as or different from the network device that obtains the APN configuration information through the response message. The correspondence between the APN ID and the assurance policy may include a correspondence between the first APN ID and a first assurance policy. In this way, after receiving the traffic that matches the first traffic characteristic from the first interface, the network device that obtains the APN configuration information through the response message includes the first APN ID in the traffic, and the network device that obtains the correspondence between the APN ID and the assurance policy may determine, based on the first APN ID in the traffic, the first assurance policy corresponding to the first APN ID, to process the traffic according to the first assurance policy, to meet the requirement of the traffic on the network.

For ease of understanding this application, the following first explains meanings of some concepts in this application.

An APN ID represents application information to which a packet or traffic belongs, and the application information may reflect a related characteristic of an application level or a host level. An example in which an APN ID indicates an application is used. In one case, the APN ID of the application may be a value that uniquely identifies application information of the application. For example, an APN ID of an application 1 is 100, and 100 uniquely identifies application information of the application 1. In another case, the APN ID of the application may alternatively be one or more identifiers. For example, the APN ID of the application may include all or some of the following information based on an actual requirement: an APP GROUP ID, a USER GROUP ID, a FLOW ID, or a service level. The APP GROUP ID uniquely identifies an application group. The application group may include an application (for example, Migu) provided by an operator, or may include an application (for example, Arena of Valor) provided by an application provider (English: Over The Top, OTT for short). The USER GROUP ID identifies a user group to which the application belongs. The FLOW ID identifies a service flow or a session to which a service packet sent by the application belongs. The service level reflects network performance required by the service packet sent by the application, for example, may be an SLA level or an SLA value. In an example, the APN ID may specifically include an SLA level, an APP ID, a user ID, and a flow ID.

An assurance policy is a general term of a processing policy for a received packet on a network device in a network, and may be specifically an execution action corresponding to an APN ID. The execution action includes at least one of the following actions: access management, forwarding, authentication, authorization, or accounting. The authentication, authorization, and accounting may be execution actions allocated by an operator to each application on a management server, and are delivered by the management server to the network device. The network device separately completes authentication, authorization, and accounting on the application based on the authentication, authorization, and accounting. The forwarding may be performing delivering by a controller (which may also be referred to as a network controller) to an ingress node (for example, a network device) of a forwarding path. If the ingress node of the forwarding path determines that an execution action corresponding to a received packet includes forwarding, the ingress node of the forwarding path may further query path information of a forwarding path of the packet, and forward the packet based on the path information of the forwarding path, to meet a network performance requirement of an application to which the packet belongs. The access management is used to restrict network access of a user. When an APN ID carried in a packet received by a network device does not match any assurance policy in the network device, or an assurance policy, corresponding to an APN ID carried in a packet received by a network device, in the network device does not include the execution action, namely, the access management, the network device may discard the packet to prevent the user from accessing the network.

In embodiments of this application, an application-aware networking manager (Application-aware Networking Management, APNM) may be further included. A staff member of an operator may allocate a corresponding APN ID to an application or a host on the APNM. The APNM is configured to manage and plan the APN ID, and synchronize the APN ID to a DNS server or a DHCP server. In addition, in one case, the APNM may synchronize the APN ID to a controller. The controller determines, based on the APN ID, an assurance policy that meets a requirement of the application or the host indicated by the APN ID for a network, and the controller sends a correspondence between the APN ID and the assurance policy to an ingress node of the network. In another case, the APNM may alternatively determine, based on the APN ID, an assurance policy that meets a requirement of the application or the host indicated by the APN ID for a network, and send a correspondence between the APN ID and the assurance policy to an ingress node of the network via the controller. Both the APNM and the controller are devices of the operator, and may be specifically two entity devices that establish a communication connection relationship, or may be two functional modules in an integrated entity device. Alternatively, the APNM and a DNS server or a DHCP server may be integrated into one entity device, and the controller and the ingress node of the network may be integrated into one entity device. In embodiments of this application, for ease of description, an example in which the APNM, the controller, the DNS, the DHCP, and the ingress node of the network are all independent entity devices is used for description.

In embodiments of this application, an application device is any device on which an application can be installed to provide a user with a service related to the application, for example, may be user equipment such as a mobile phone or a computer, or for another example, may be a network cloud engine (English: Network Cloud Engine, NCE for short) or a server that provides a corresponding service for an application or some applications on the user equipment. A network device is a device having a packet forwarding function, for example, may be a device like a router, a switch, a forwarder, or a firewall. A controller is a device or a module in a device that has management and control functions for a network. An APNM is a device or a module in a device that can manage and plan an APN ID. It should be noted that the network device and a node in embodiments of this application have a same meaning. It should be noted that the foregoing entity forms of various devices are merely examples for description, and are not specifically limited.

For ease of understanding the method for obtaining an APN ID provided in this application, the following describes the method with reference to the accompanying drawings.

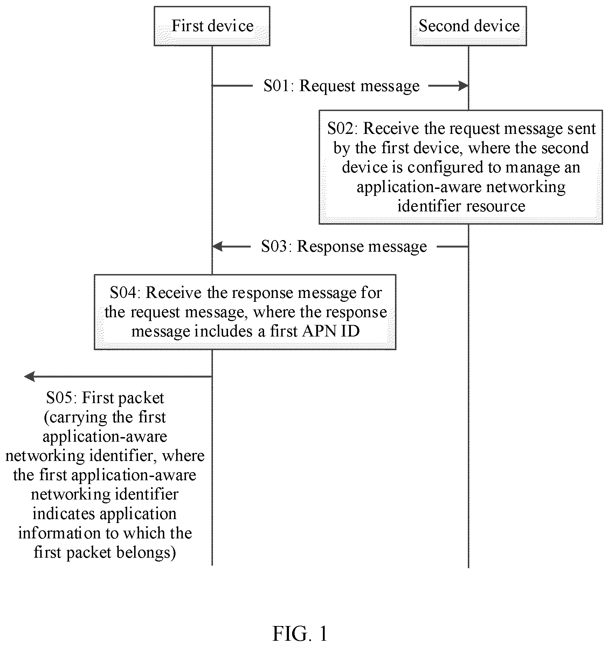

FIG. 1 is a schematic flowchart of the method for obtaining an APN ID according to an embodiment of this application. Refer to FIG. 1. The method may include:
S01: A first device sends a request message to a second device, where the second device is configured to manage an application-aware networking identifier resource.
S02: The second device receives the request message sent by the first device.
S03: The second device sends a response message to the first device for the request message, where the response message includes a first APN ID.
S04: The first device receives the response message for the request message.
S05: The first device sends a first packet, where the first packet carries the first APN ID, and the first APN ID indicates application information to which the first packet belongs.

The first application-aware networking identifier may be carried in an IPv6 packet header or an IPv6 extension header of the first packet.

It should be noted that, to ensure security of the obtained first APN ID, a key corresponding to the first APN ID may be further obtained. The key may be a symmetric key of hash-based message authentication code (Hash-based Message Authentication Code, HMAC), or may be a private key or a public key of a digital signature. Based on different key types and security technologies, the first APN ID is verified. For example, whether the first APN ID is anti-tampered or complete may be verified. In an example, the second device may send the response message including the key together with the first APN ID to the first device. Alternatively, in another example, the second device may send another message including the key to the first device. However, in this implementation, indication information further needs to be included in the message carrying the key, to indicate that the key is used to verify the first APN ID.

If the first device obtains the first APN ID and the key, in one aspect, before S05, the first device may verify the first APN ID based on the obtained key. If the verification succeeds, it may be determined that the obtained first APN ID is secure, and S05 is performed. Otherwise, it may be determined that the obtained first APN ID is not secure, and S05 may not be performed. In another aspect, the first APN ID and the key may be encapsulated into the first packet in S05, so that a device receiving the first packet may verify the security of the first APN ID in the first packet based on the key. If it is determined, through verification, that the first APN ID is not tampered with in a process of transmitting the first packet, it is determined that the first APN ID is secure, and the first packet may be pertinently processed based on the first APN ID. Otherwise, it may be determined that the first APN ID is not secure enough, and the first packet may not be processed based on the first APN ID. For example, the first packet may be discarded.

In an example, the application information to which the first packet belongs reflects a first application to which the first packet belongs.

In one case, the first device is an application device, the application device bears the first application, and the second device is a DNS server. In this case, the request message may carry a first domain name, the request message is used to request an internet protocol IP address of the first domain name, and the first application-aware networking identifier matches the first domain name. The response message further includes a first IP address, the first IP address matches the first domain name, the first packet is used to access the first domain name, and a destination address of the first packet is the first IP address. For example, the application device is user equipment that bears the first application. In this case, S05 may include: The first device sends the first packet to an application server, where the application server is configured to provide a service for the first application. The method may further include: The first device receives a second packet sent by the application server, where the second packet carries a second application-aware networking identifier, and the second application-aware networking identifier indicates application information to which the second packet belongs. The second application-aware networking identifier may be the same as or different from the first application-aware networking identifier. If the second application-aware networking identifier is the same as the first application-aware networking identifier, the application server may obtain the first application-aware networking identifier from the first packet, and encapsulate the first application-aware networking identifier into a packet to be sent to the first application, to obtain the second packet. If the second application-aware networking identifier is different from the first application-aware networking identifier, the DNS server may further send the second application-aware networking identifier to the application server, for the application server to include the second application-aware networking identifier in a sent second packet, where the second application-aware networking identifier indicates application information to which the second packet belongs. For another example, the application device is an application server that provides a service for the first application. In this case, S05 may include: The first device sends the first packet to user equipment, where the user equipment bears the first application.

The response message sent by the second device in S03 is generated through the following operations: The second device obtains, from an A record, the first IP address matching the first domain name, obtains, from a TXT record, the first application-aware networking identifier matching the first domain name, and generates the response message, where the response message includes the first application-aware networking identifier and the first IP address.

It should be noted that, for specific implementations, achieved technical effect, and the like in this case, refer to related descriptions of a method 100 below.

In another case, the first device is a network device, an application device on which the first application is located accesses a network via the network device, and the second device is a DHCP server. In this case, the request message is used to request the DHCP server to allocate an IP address to the network device. The response message further includes a first IP address, the first IP address corresponds to application-aware networking configuration information, and the application-aware networking configuration information includes a correspondence among the first application-aware networking identifier, a first interface, and a first traffic characteristic. The first packet in S05 may be obtained in the following manner: The first device receives, from the first interface, a second packet corresponding to the first application, determines that a traffic characteristic of the second packet matches the first traffic characteristic, and encapsulates the first application-aware networking identifier into the second packet, to obtain the first packet. The application-aware networking configuration information may be carried in an option (Option) field in the response message. For example, the application-aware networking configuration information may be carried in a type-length-value (Type-Length-Value, TLV) field in the option field in the response message.

It should be noted that, for specific implementations, achieved technical effect, and the like in this case, refer to related descriptions of a method 300 below.

In another example, the application information to which the first packet belongs reflects a first host to which the first packet belongs, and the first application-aware networking identifier may be, for example, an APN ID corresponding to the first host.

In one case, the second device is a DHCP server, and the first device is the first host. In this case, the request message is used to request the DHCP server to allocate an IP address to the first host. The response message further includes a first IP address, the first IP address is the IP address allocated by the DHCP server to the first host, and the first IP address matches the first application-aware networking identifier. For example, S05 may include: The first host sends the first packet to a second host, where a source IP address of the first packet is the first IP address. In this case, the method may further include: The first host receives a second packet sent by the second host, where the second packet includes a second application-aware networking identifier, and the second application-aware networking identifier indicates application information to which the second packet belongs. The second application-aware networking identifier may be the same as or different from the first application-aware networking identifier. If the second application-aware networking identifier is the same as the first application-aware networking identifier, the second host may obtain the first application-aware networking identifier from the first packet, and encapsulate the first application-aware networking identifier into a packet to be sent to the first host, to obtain the second packet. If the second application-aware networking identifier is different from the first application-aware networking identifier, the DHCP server may further send the second application-aware networking identifier to the second host, for the second host to include the second application-aware networking identifier in a sent second packet, where the second application-aware networking identifier indicates application information to which the second packet belongs. It should be noted that the first application-aware networking identifier is carried in an option field in the response message.

It should be noted that, for specific implementations, achieved technical effect, and the like in this case, refer to related descriptions of a method 200 below.

In another case, the second device is a DHCP server, the first device is a network device, and the first host accesses a network via the network device. In this case, the request message is used to request the DHCP server to allocate an IP address to the network device. The response message further includes a first IP address, the first IP address corresponds to application-aware networking configuration information, and the application-aware networking configuration information includes a correspondence among the first application-aware networking identifier, a first interface, and a first traffic characteristic. The first packet in S05 may be obtained in the following manner: The first device receives, from the first interface, a second packet corresponding to the first host, determines that a traffic characteristic of the second packet matches the first traffic characteristic, and encapsulates the first application-aware networking identifier into the second packet, to obtain the first packet.

It should be noted that, for specific implementations, achieved technical effect, and the like in this case, refer to related descriptions of a method 300 below.

It can be learned that, after receiving a request message from the first device, the second device configured to manage the application-aware networking identifier resource may send, to the first device, a response message that corresponds to the request message and that includes an application-aware networking identifier, so that the first device quickly and conveniently obtains the application-aware networking identifier. In addition, preparation is made for subsequently carrying the application-aware networking identifier in a sent packet, so that a network can receive the packet carrying the application-aware networking identifier, and perceive application information of the packet based on the application-aware networking identifier in the packet, for example, perceive an application or a host from which the packet comes. Therefore, the packet is pertinently processed based on a requirement of the application or the host on the network, to meet the requirement of the application or the host on the network.

The method provided in this embodiment of this application is applicable to at least the following three implementations, to obtain APN IDs of a host or an application in respective different scenarios. To make the method provided in this embodiment of this application easier to understand, the following separately describes the three implementations with reference to the accompanying drawings.

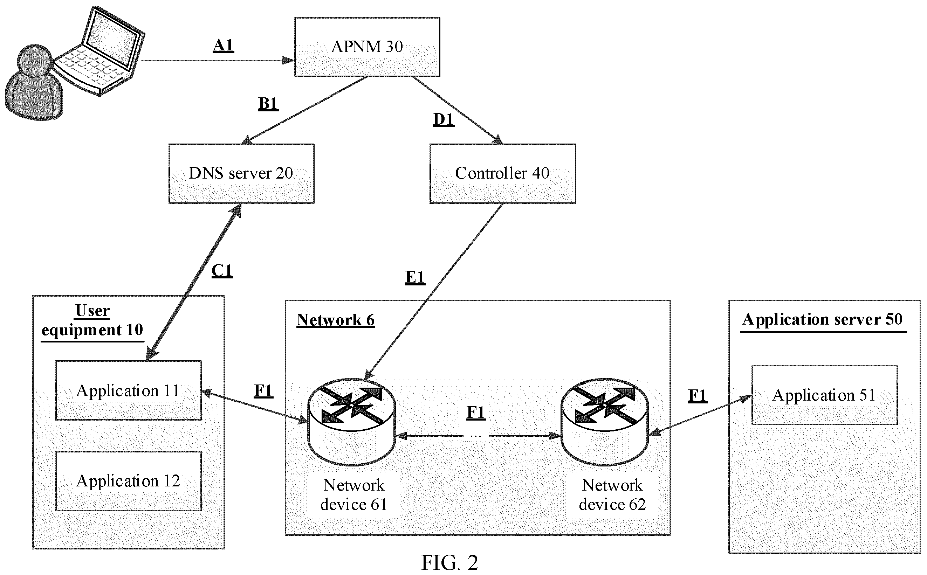

For a first possible implementation, an applicable scenario may be, for example, shown in FIG. 2. Refer to FIG. 2. The scenario may include user equipment 10, a DNS server 20, an APNM 30, a controller 40, an application server 50, and a network 60. The network 60 includes a network device 61 connected to the user equipment 10 and a network device 62 connected to the application server 50. The user equipment 10 includes an application 11 and an application 12, and the application server 50 includes an application 51 that provides a service for the application 11. This embodiment of this application may be applied to a case in which the application 11 of the user equipment 10 obtains, by interacting with the DNS server 20, an APN ID 11 corresponding to the application 11, or may be applied to a case in which the application 51 of the application server 50 obtains, by interacting with the DNS server 20, an APN ID 51 corresponding to the application 51. Specific implementations of the two cases are the same. The following uses the case in which the application 11 of the user equipment 10 obtains, by interacting with the DNS server 20, the APN ID 11 corresponding to the application 11 as an example for description.

The DNS server 20 is configured to provide a domain name resolution function, that is, has a function of providing an IP address corresponding to a domain name for an application.

The APNM 30 is configured to manage and plan an APN ID, synchronize a planned APN ID to the DNS server 20, and send the planned APN ID (or a correspondence between the APN ID and an assurance policy) to the controller 40.

The controller 40 is configured to obtain an APN ID, determine an assurance policy corresponding to the APN ID, and send a correspondence between the APN ID and the assurance policy to an ingress node (namely, the network device 61) of the network 6. Alternatively, the controller 40 is configured to obtain a correspondence between an APN ID and an assurance policy, and send the correspondence between the APN ID and the assurance policy to an ingress node (namely, the network device 61) of the network 6.

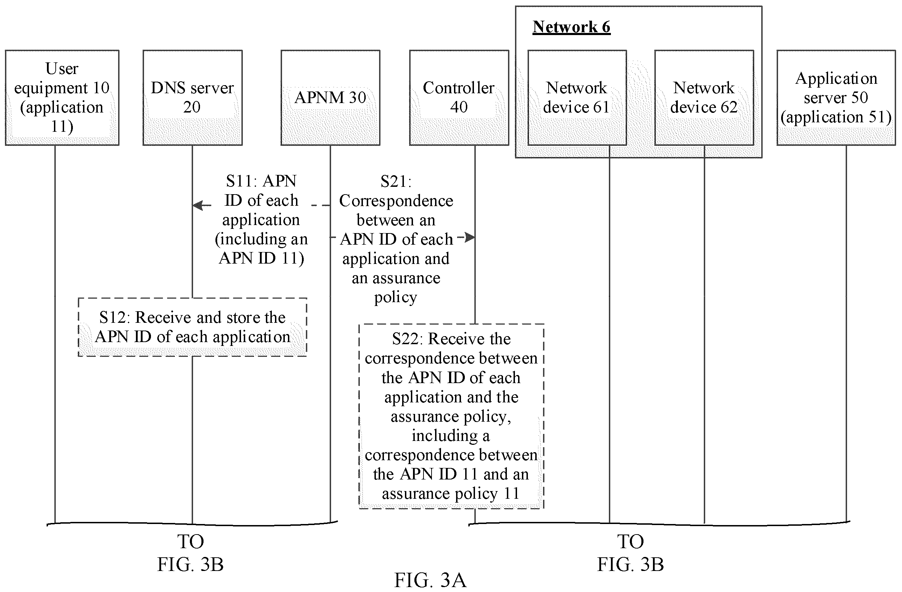

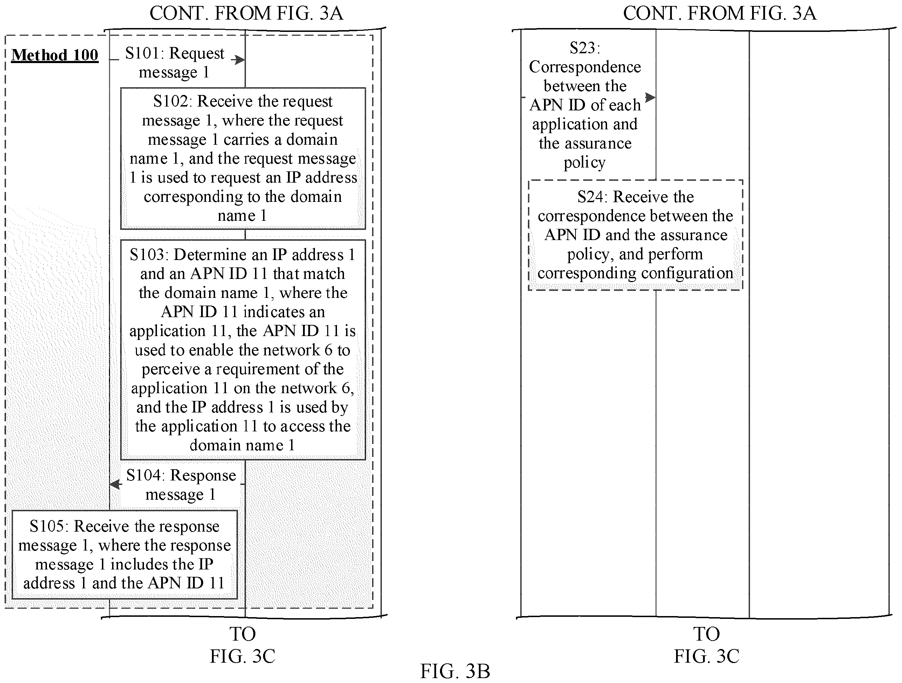

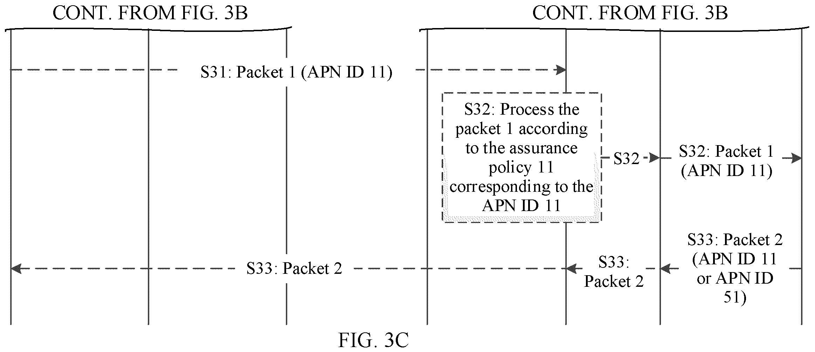

FIG. 3A to FIG. 3C are a schematic flowchart of a method 100 for obtaining an APN ID according to an embodiment of this application. The method 100 is applicable to the scenario shown in FIG. 3A to FIG. 3C. For ease of understanding, interaction between the application 11 of the user equipment 10 and the DNS server 20 in FIG. 3A to FIG. 3C is used to describe this embodiment of this application.

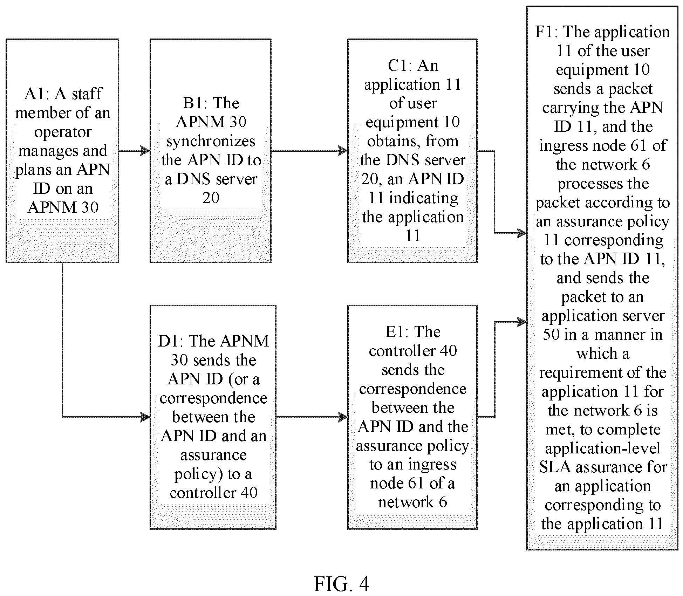

It should be noted that, in the scenario shown in FIG. 2, for an overall procedure of implementing an application-level APN6 technology, refer to FIG. 4. For example, the overall procedure may include: A1: A staff member of an operator manages and plans an APN ID on the APNM 30. B1: The APNM 30 synchronizes the APN ID to the DNS server 20. C1: The application 11 of the user equipment 10 obtains, from the DNS server 20, an APN ID 11 indicating the application 11. D1: The APNM 30 sends the APN ID (or a correspondence between the APN ID and an assurance policy) to the controller 40. E1: The controller 40 sends the correspondence between the APN ID and the assurance policy to the ingress node 61 of the network 6. F1: The application 11 of the user equipment 10 sends a packet carrying the APN ID 11, and the ingress node 61 of the network 6 processes the packet according to the assurance policy 11 corresponding to the APN ID 11, and sends the packet to the application server 50 in a manner in which a requirement of the application 11 on the network 6 is met, to complete corresponding application-level SLA assurance for the application 11. The method 100 relates to C1. For ease of understanding by a reader, other interactions in the overall procedure are also reflected in FIG. 3A to FIG. 3C in a dashed line manner. FIG. 3A to FIG. 3C further include: interaction between the APNM 30 and the DNS server 20 (namely, B1), interaction between the APNM 30 and the controller 40 (namely, D1), interaction between the controller 40 and the network device 61 (namely, E1), and interaction between the application 11 of the user equipment 10 and the application server 50 (namely, F1).

During specific implementation, for C1, the method 100 may include, for example, S101 to S105.

S101: The application 11 of the user equipment 10 sends a request message 1 to the DNS server 20, where the request message 1 carries a domain name 1, and the request message 1 is used to request an IP address corresponding to the domain name 1.

S102: The DNS server 20 receives the request message 1 sent by the application 11 of the user equipment 10.

It may be understood that an application may usually include a resolver and a browser. A DNS server is a server set, and may include a recursive domain name server, an authoritative root server, an authoritative suffix server (for example, an authoritative cn server, an authoritative net server, or an authoritative com server), an authoritative domain server (for example, an authoritative zdns.cn server corresponding to a domain name www.zdns.cn), and a world wide web (World Wide Web, Web) server. A domain name resolution process may include: The resolver of the application sends a resolution request including a domain name to the recursive domain name server. The recursive domain name server requests an address of the domain name from the authoritative root server, and the authoritative root server returns reference information pointing to an authoritative suffix server to the recursive domain name server. The recursive domain name server requests the address of the domain name from the authoritative suffix server, and the authoritative suffix server returns reference information pointing to an authoritative domain server to the recursive domain name server. The recursive domain name server requests the address of the domain name from the authoritative domain server, and the authoritative domain server returns the IP address of the domain name. The recursive domain name server caches information returned by authoritative servers at all levels, and sends a resolution request response to the resolver of the application to notify the resolver of the requested IP address corresponding to the domain name. The browser of the application may request to access the domain name from the web server based on a hypertext transfer protocol (HyperText Transfer Protocol, HTTP), and the web server sends an HTTP response to the browser. In the DNS server, a carrier that records a correspondence between a domain name and an IP address in the authoritative domain server may be usually referred to as an A record. A TXT record exists on the web server, and the TXT record is usually used to record a description of a record (for example, an A record), or the TXT record may be further used to verify ownership of a domain name, for example, if a domain name A of a user A uses a service of a user B, the user B requires the user A to create a TXT record that is used by the user B to verify whether the user A has management permission for the domain name A.

The domain name mentioned in this embodiment of this application is a character domain name, for example, www.zdns.cn. The domain name may include a domain and a suffix. For example, a suffix of the domain name www.zdns.cn is cn, and a domain is zdns.

In this embodiment of this application, the APN ID 11 allocated by the APNM 30 to the application 11 may be recorded on a web server in the DNS server 20, and the web server stores a correspondence between the domain name 1 and the APN ID 11 through a TXT record. The TXT record may include only the correspondence between the domain name 1 and the APN ID 11, or may include a correspondence among the domain name 1, an IP address 1 allocated to the application 11, and the APN ID 11.

Because the DNS server 20 is a server set, the request message 1 in S101 and S102 may include a resolution request 1 that is sent by a resolver of the application 11 of the user equipment 10 to the DNS server 20, and a message 2 that may be used by a browser of the application 11 for requesting, based on HTTP, to access the domain name 1 from the web server, where the resolution request 1 is used to request an A record of the domain name 1, and the message 2 is used to request a TXT record of the domain name 1.

S103: The DNS server 20 determines the IP address 1 and the APN ID 11 that match the domain name 1, where the APN ID 11 indicates the application 11, the APN ID 11 is used to enable the network 6 to perceive a requirement of the application 11 on the network 6, and the IP address 1 is used by the application 11 to access the domain name 1.

The DNS server 20 pre-stores a mapping relationship. The mapping relationship may include the correspondence among the domain name 1, the IP address 1, and the APN ID 11. The correspondence among the domain name 1, the IP address 1, and the APN ID 11 may be a group of correspondences, that is, a group of correspondences indicates that the domain name 1 corresponds to (or matches) the IP address 1 and the APN ID 11. Alternatively, the correspondence among the domain name 1, the IP address 1, and the APN ID 11 may be two groups of correspondences. One group of correspondences indicates that the domain name 1 corresponds to the IP address 1, and the other group of correspondences indicates that the domain name 1 (or the IP address 1) corresponds to the APN ID 11.

Before S103, the method may further include: The DNS server 20 obtains the mapping relationship. In a first case, the mapping relationship stored on the DNS server 20 may be generated and stored by the DNS server 20 in response to a configuration of a user after the user performs manual configuration on the DNS server 20. In a second case, the mapping relationship stored on the DNS server 20 may be synchronized by the APNM 30 to the DNS server 20, that is, the DNS server 20 receives and stores the mapping relationship sent by the APNM 30.

For the second case, before S103, A1: A staff member of an operator manages and plans an APN ID on the APNM 30, and B1: The APNM 30 synchronizes the APN ID to the DNS server 20 may be further included. For example, B1 may include S11 and S12 in FIG. 3A to FIG. 3C.

S11: The APNM 30 sends an APN ID of each application to the DNS server 20, including the APN ID 11.

S12: The DNS server 20 receives and stores the APN ID of each application.

In this way, the DNS server 20 may include the correspondence between the APN ID 11 and the domain name 1, the correspondence between the APN ID 11 and the IP address 1, or the correspondence among the APN ID 11, the IP address 1, and the domain name 1 in a TXT record, to provide a data basis for performing S103.

It should be noted that there is no limitation on a sequence of performing S11 and S12, and S101 and S102. S11 and S12 may be performed before S101 and S102, or S101 and S102 may be performed before S11 and S12, or S11 and S12, and S101 and S102 may be performed simultaneously.

During specific implementation, S103 may include: The DNS server 20 searches the mapping relationship for the IP address 1 and the APN ID 11 that match the domain name 1 carried in the request message 1.

In an example, if the A record includes the correspondence between the domain name 1 and the IP address 1, and the TXT record includes the correspondence between the domain name 1 (or the IP address 1) and the APN ID 11, S103 may include: An authoritative domain server in the DNS server 20 determines, based on the A record, the IP address 1 corresponding to the domain name 1; and the web server in the DNS server 20 determines, based on the TXT record, the APN ID 11 corresponding to the domain name 1 (or the IP address 1).

In another example, if the TXT record includes the correspondence among the domain name 1, the IP address 1, and the APN ID 11, S103 may include: The web server in the DNS server 20 determines, based on the TXT record, the IP address 1 and the APN ID 11 that correspond to the domain name 1.

S104: The DNS server 20 sends a response message 1 to the application 11 of the user equipment 10, where the response message 1 includes the IP address 1 and the APN ID 11.

S105: The application 11 of the user equipment 10 receives the response message 1 sent by the DNS server 20.

During specific implementation, after S103, the DNS server 20 may generate the response message 1 corresponding to the request message 1, and send the response message 1 to the application 11 of the user equipment 10 in response to the received request message 1. In addition to the IP address 1 that corresponds to the domain name 1 and that is requested by the application 11 of the user equipment 10, the response message 1 further includes the APN ID 11 that can indicate the application 11. The APN ID 11 is considered as an identifier of the application 11 in a network (for example, the network 6). A packet carrying the APN ID 11 is processed by the network based on a requirement of the application 11, to meet the requirement of the application 11 on the network.

In an example, if the A record includes the correspondence between the domain name 1 and the IP address 1, and the TXT record includes the correspondence between the domain name 1 (or the IP address 1) and the APN ID 11, the response message 1 in S104 may include: a message that is sent by the authoritative domain server in the DNS server 20 to the resolver of the application 11 via the recursive domain name server and that carries the IP address 1 corresponding to the domain name 1, and an HTTP response message that is sent by the web server in the DNS server 20 to the browser of the application 11 and that carries the APN ID 11.

In another example, if the TXT record includes the correspondence among the domain name 1, the IP address 1, and the APN ID 11, the response message 1 in S104 may include an HTTP response message that is sent by the web server in the DNS server 20 to the browser of the application 11, where the HTTP response message includes the IP address 1 and the APN ID 11.

In this way, after receiving the request message 1 that is sent by the application 11 and that is used to request the IP address of the domain name 1, the DNS server 20 returns the response message 1 including both the APN ID 11 of the application 11 and the requested IP address 1 to the application 11, so that the application 11 quickly and conveniently obtains the APN ID 11 that can indicate the application 11 and that is perceived by a network, and subsequently, a packet of the application 11 can be perceived by the network and pertinently processed. This ensures a requirement of the application 11 on the network.

After S105, F1 may be further included: The application 11 of the user equipment 10 sends a packet carrying the APN ID 11, and the ingress node 61 of the network 6 processes the packet according to the assurance policy 11 corresponding to the APN ID 11. However, before F1 is performed, D1: The APNM 30 sends the APN ID (or a correspondence between the APN ID and an assurance policy) to the controller 40, and E1: The controller 40 sends the correspondence between the APN ID and the assurance policy to the ingress node 61 of the network 6 may be further included. For example, D1 and E1 may include S21 to S24 in FIG. 3A to FIG. 3C, where S21 and S22 correspond to D1, S23 and S24 correspond to E1, and S21 to S24 may be, for example, as follows:
S21: The APNM 30 sends a correspondence between an APN ID of each application and an assurance policy to the controller 40, including a correspondence between the APN ID 11 and the assurance policy 11.
S22: The controller 40 receives the correspondence between the APN ID of each application and the assurance policy.
S23: The controller 40 sends the correspondence between the APN ID of each application and the assurance policy to the network device 61.
S24: The network device 61 receives the correspondence between the APN ID of each application and the assurance policy, and performs corresponding configuration.

The APN ID of each application and the corresponding assurance policy are configured on the ingress node (namely, the network device 61) of the network 6 through S21 to S24, so that after receiving a packet carrying an APN ID, the network device 61 can determine an assurance policy (namely, an assurance policy corresponding to the APN ID carried in the packet) that needs to be used for the packet, and processing of the packet by the network 6 can meet a requirement of the application on the network. In other words, both performing of S21 to S24 and performing of S101 to S105 prepare for subsequent F1.

For example, F1 may include S31 and S32 in FIG. 3A to FIG. 3C.

S31: The application 11 of the user equipment 10 sends a packet 1 to the network device 61, where the packet 1 carries the APN ID 11.

S32: The network device 61 processes the packet 1 according to the assurance policy 11 corresponding to the APN ID 11, where the processing includes: sending the packet 1 to the application server 50 via the network device 62.

During specific implementation, after receiving the packet 1, the network device 61 may obtain the APN ID 11 by parsing the packet 1, then determine, based on a local configuration, the assurance policy 11 corresponding to the APN ID 11, and then process the packet 1 according to the assurance policy 11. It should be noted that, in addition to carrying the APN ID 11, the packet 1 may further include a source address (namely, an IP address of the application 11) and a destination address (namely, the IP address 1) of the packet 1.

In one case, if a requirement of a service on the network 6 in a direction from the application server 50 to the application 11 is consistent with a requirement of a service on the network 6 in a direction from the application 11 to the application server 50, after S32, S33: The application server 50 sends a packet 2 to the application 11 of the user equipment 10 over the network 6 may be further included, where the packet 2 includes the APN ID 11, and processing of the packet 2 by the network 6 meets a requirement of the application 11 on the network 6. To be specific, after receiving the packet 1, the application server 50 obtains the APN ID 11 in the packet 1, and then encapsulates the APN ID 11 into a packet from the application server 50 to the application 11, to obtain the packet 2. In this implementation, as an ingress node of the network 6 in the direction from the application server 50 to the application 11, the network device 62 also needs to obtain a correspondence between the APN ID 11 and an assurance policy 11', the assurance policy 11' can ensure that processing of the packet 2 from the network device 62 to the network device 61 meets the requirement of the application 11 on the network 6. In this way, the network device 62 may process the packet 2 according to the assurance policy 11'. The processing includes: sending the packet 2 to the application 11 of the user equipment 10 via the network device 61.

In another case, if a requirement of a service on the network 6 in a direction from the application server 50 to the application 11 is inconsistent with a requirement of a service on the network 6 in a direction from the application 11 to the application server 50, after S32, S33: The application server 50 sends a packet 2 to the application 11 of the user equipment 10 over the network 6 may be further included, where the packet 2 includes the APN ID 51, and processing of the packet 2 by the network 6 meets a requirement of the application 51 on the network 6. In this implementation, the application 51 that provides the service for the application 11 on the application server 50 also needs to receive the APN ID 51 that indicates the application 51 and that is sent by the APNM 30 via the DNS server 20 (that is, before S33, the application server 50 is used as an application device, and the application 51 is used as an application of the application device, to perform the method provided in the first possible implementation in this embodiment of this application). As an ingress node of the network 6 in the direction from the application server 50 to the application 11, the network device 62 also needs to obtain a correspondence between the APN ID 51 and an assurance policy 51'. The assurance policy 51' can ensure that processing of the packet 2 from the network device 62 to the network device 61 meets a requirement of the application 51 on the network 6. In this way, the network device 62 may process the packet 2 according to the assurance policy 51', and the processing includes: sending the packet 2 to the application 11 of the user equipment 10 via the network device 61.

It may be understood that, in this embodiment of this application, the DNS server 20 writes an APN ID of an application into a TXT record corresponding to a domain name. The application identifies the TXT record returned by the DNS server 20, and reserves the APN ID when constructing a domain name cache, so that the APN ID is carried in a packet when a socket session is established, and the APN ID is obtained by reading the domain name cache when a socket session is established again. An application server may modify a protocol stack of a transmission control protocol/internet protocol (Transmission Control Protocol/Internet Protocol, TCP/IP) at a server side. An APN ID of a packet received from the application is encapsulated into a packet about to be sent to the application.

It can be learned that, in the first possible implementation provided in this embodiment of this application, a DNS server can send, to an application, a response message that is used to feed back an IP address corresponding to a domain name and that includes an APN ID indicating the application of an application device, to complete distribution of the APN ID of the application on an application device (user equipment or an application server). This makes it possible to subsequently implement application-level service assurance based on the APN6 technology.

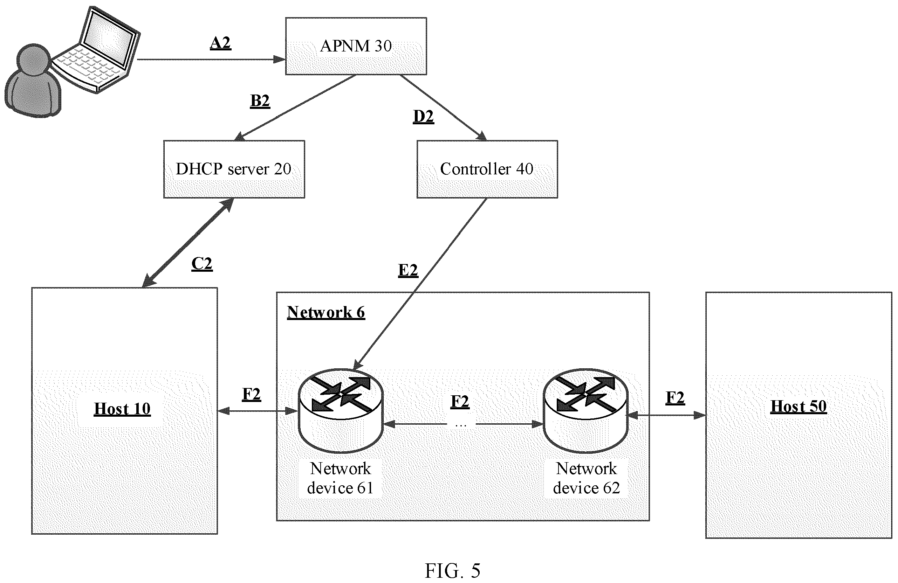

For a second possible implementation, an applicable scenario may be, for example, shown in FIG. 5. Refer to FIG. 5. The scenario may include a host 10, a DHCP server 20, an APNM 30, a controller 40, a host 50, and a network 60. The network 60 includes a network device 61 connected to the host 10 and a network device 62 connected to the host 50. This embodiment of this application may be applied to a case in which the host 10 obtains a corresponding APN ID 10 by interacting with the DHCP server 20, or may be applied to a case in which the host 50 obtains a corresponding APN ID 50 by interacting with the DHCP server 20. Specific implementations of the two cases are the same. The following uses the case in which the host 10 obtains the corresponding APN ID 10 by interacting with the DHCP server 20 as an example for description.

The DHCP server 20 is configured to manage and allocate an IP address in a centralized manner, so that a host in the network dynamically obtains information such as an IP address and a DNS server address.

The APNM 30 is configured to manage and plan an APN ID, synchronize a planned APN ID to the DHCP server 20, and send the planned APN ID (or a correspondence between the APN ID and an assurance policy) to the controller 40.

The controller 40 is configured to obtain an APN ID, determine an assurance policy corresponding to the APN ID, and send a correspondence between the APN ID and the assurance policy to an ingress node (namely, the network device 61) of the network 6. Alternatively, the controller 40 is configured to obtain a correspondence between an APN ID and an assurance policy, and send the correspondence between the APN ID and the assurance policy to an ingress node (namely, the network device 61) of the network 6.

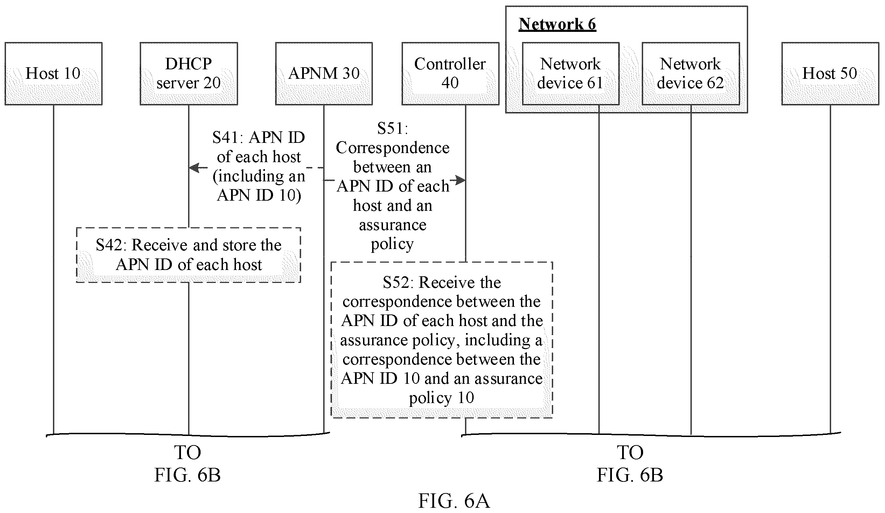

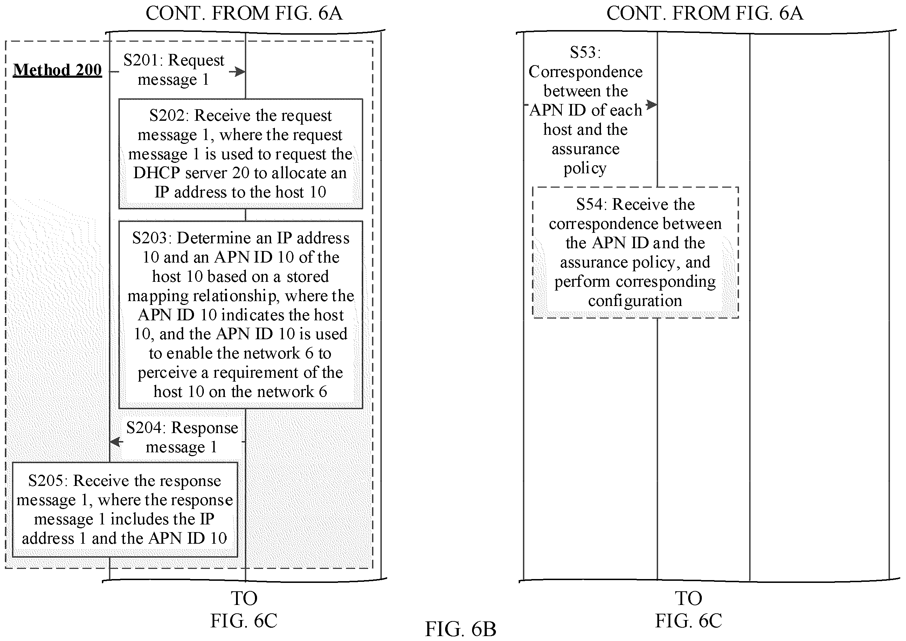

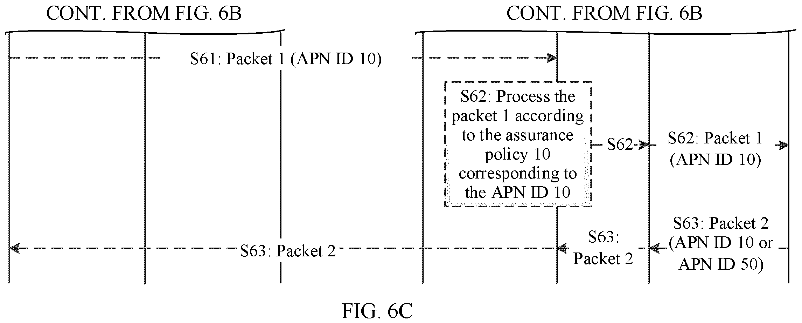

FIG. 6A to FIG. 6C are a schematic flowchart of a method 200 for obtaining an APN ID according to an embodiment of this application. The method 200 is applicable to the scenario shown in FIG. 5. For ease of understanding, interaction between the host 10 and the DHCP server 20 in FIG. 5 is used to describe this embodiment of this application.

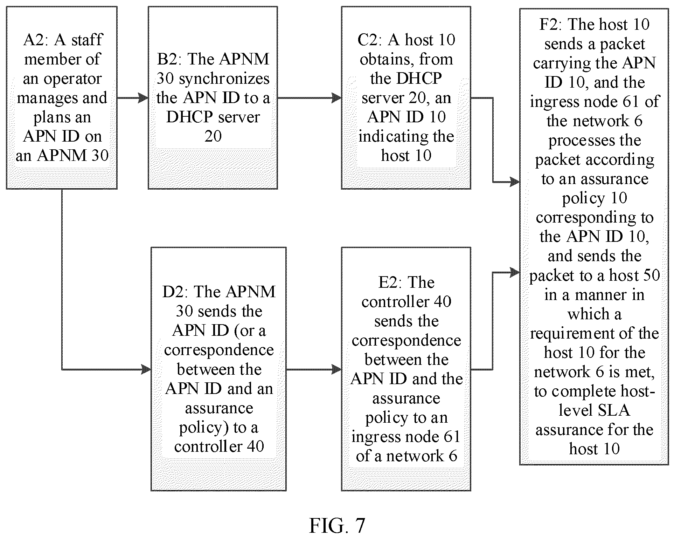

It should be noted that, in the scenario shown in FIG. 5, for an overall procedure of implementing a host-level APN6 technology, refer to FIG. 7. For example, the overall procedure may include: A2: A staff member of an operator manages and plans an APN ID on the APNM 30. B2: The APNM 30 synchronizes the APN ID to the DHCP server 20. C2: The host 10 obtains, from the DHCP server 20, an APN ID 10 indicating the host 10. D2: The APNM 30 sends the APN ID (or a correspondence between the APN ID and an assurance policy) to the controller 40. E2: The controller 40 sends the correspondence between the APN ID and the assurance policy to the ingress node 61 of the network 6. F2: The host 10 sends a packet carrying the APN ID 10, and the ingress node 61 of the network 6 processes the packet according to the assurance policy 10 corresponding to the APN ID 10, and sends the packet to the host 50 in a manner in which a requirement of the host 10 on the network 6 is met, to complete host-level SLA assurance for the host 10. The method 200 relates to C2. For ease of understanding by a reader, other interactions in the overall procedure are also reflected in FIG. 6A to FIG. 6C in a dashed line manner. FIG. 6A to FIG. 6C further include: interaction between the APNM 30 and the DHCP server 20 (namely, B2), interaction between the APNM 30 and the controller 40 (namely, D2), interaction between the controller 40 and the network device 61 (namely, E2), and interaction between the host 10 and the host 50 (namely, F2).

During specific implementation, for C2, the method 200 may include, for example, S201 to S205.

S201: The host 10 sends a request message 1 to the DHCP server 20, where the request message 1 is used to request the DHCP server 20 to allocate an IP address to the host 10.

S202: The DHCP server 20 receives the request message 1 sent by the host 10.

S203: The DHCP server 20 determines an IP address 10 and the APN ID 10 of the host 10 based on a stored mapping relationship, where the mapping relationship includes a mapping relationship between the IP address 10 and the APN ID 10 of the host 10, and the APN ID 10 indicates the host 10. The APN ID 10 is used to enable the network 6 to perceive the requirement of the host 10 on the network 6, and the IP address 10 is used by the host 10 as an IP address for interacting with another device.

Before S203, the method may further include: The DHCP server 20 obtains the mapping relationship. In a first case, the mapping relationship stored on the DHCP server 20 may be generated and stored by the DHCP server 20 in response to a configuration of a user after the user performs manual configuration on the DHCP server 20. In a second case, the mapping relationship stored on the DHCP server 20 may be synchronized by the APNM 30 to the DHCP server 20, that is, the DHCP server 20 receives and stores the mapping relationship sent by the APNM 30.

For the second case, before S203, A2: A staff member of an operator manages and plans an APN ID on the APNM 30, and B2: The APNM 30 synchronizes the APN ID to the DHCP server 20 may be further included. For example, B2 may include S41 and S42 in FIG. 6A to FIG. 6C.

S41: The APNM 30 sends an APN ID of each application to the DHCP server 20, including the APN ID 10.

S42: The DHCP server 20 receives and stores the APN ID of each application.

In this way, the DHCP server 20 stores the correspondence between the APN ID 10 and the IP address 10, to provide a data basis for performing S203.

It should be noted that there is no limitation on a sequence of performing S41 and S42, and S201 and S202. S41 and S42 may be performed before S201 and S202, or S201 and S202 may be performed before S41 and S42, or S41 and S42, and S201 and S202 may be performed simultaneously.

During specific implementation, S203 may include: The DHCP server 20 searches the mapping relationship for a correspondence matching the request message 1, records an IP address in the correspondence as the IP address 10, and records an APN ID in the correspondence as the APN ID 10. In an example, an index of the mapping relationship may be a media access control (Media Access Control, MAC) address, that is, the mapping relationship includes a correspondence among a MAC address 10, the IP address 10, and the APN ID 10. After receiving the request message 1, the DHCP server 20 parses the request message 1 to obtain that a source MAC address of the request message 1 is the MAC address 10, searches the mapping relationship for a correspondence matching the MAC address 10, records an IP address in the correspondence as the IP address 10, and records an APN ID in the correspondence as the APN ID 10.

S204: The DHCP server 20 sends a response message 1 to the host 10, where the response message 1 includes the IP address 10 and the APN ID 10.

S205: The host 10 receives the response message 1 sent by the DHCP server 20.

During specific implementation, after S203, the DHCP server 20 may generate the response message 1 corresponding to the request message 1, and send the response message 1 to the host 10 in response to the received request message 1. In addition to the IP address 10 requested by the host 10, the response message 1 further includes the APN ID 10 that can indicate the host 10. The APN ID 10 is considered as an identifier of the host 10 in a network (for example, the network 6). A packet carrying the APN ID 10 is processed by the network based on a requirement of the host 10, to meet the requirement of the host 10 on the network.

An option (Option) in the response message 1 may be used to carry the APN ID 10. In other words, the DHCP server 20 may store an APN ID corresponding to each host, and distribute the APN ID to a corresponding host through the option when allocating an IP address to the host.

In this way, after receiving the request message 1 that is sent by the host 10 and that is used to request the IP address, the DHCP server 20 returns the response message 1 including both the APN ID 10 of the host 10 and the requested IP address 10 to the host 10, so that the host 10 quickly and conveniently obtains the APN ID 10 that can indicate the host 10 and that is perceived by a network, and subsequently, a packet of the host 10 can be perceived by the network and pertinently processed. This ensures a requirement of the host 10 on the network.

After S205, F2 may be further included: The host 10 sends a packet carrying the APN ID 10, and the ingress node 61 of the network 6 processes the packet according to the assurance policy 10 corresponding to the APN ID 10. However, before F2 is performed, D2: The APNM 30 sends the APN ID (or a correspondence between the APN ID and an assurance policy) to the controller 40, and E2: The controller 40 sends the correspondence between the APN ID and the assurance policy to the ingress node 61 of the network 6 may be further included. For example, D2 and E2 may include S51 to S54 in FIG. 6A to FIG. 6C, where S51 and S52 correspond to D2, S53 and S54 correspond to E2, and S51 to S54 may be, for example, as follows:
S51: The APNM 30 sends a correspondence between an APN ID of each host and an assurance policy to the controller 40, including a correspondence between the APN ID 10 and the assurance policy 10.
S52: The controller 40 receives the correspondence between the APN ID of each host and the assurance policy.
S53: The controller 40 sends the correspondence between the APN ID of each host and the assurance policy to the network device 61.
S54: The network device 61 receives the correspondence between the APN ID of each host and the assurance policy, and performs corresponding configuration.

The APN ID of each host and the corresponding assurance policy are configured on the ingress node (namely, the network device 61) of the network 6 through S51 to S54, so that after receiving a packet carrying an APN ID, the network device 61 can determine an assurance policy (namely, an assurance policy corresponding to the APN ID carried in the packet) that needs to be used for the packet, and processing of the packet by the network 6 can meet a requirement of the host on the network. In other words, both performing of S51 to S54 and performing of S201 to S205 prepare for subsequent F2.

For example, F2 may include S61 and S62 in FIG. 6A to FIG. 6C.

S61: The host 10 sends a packet 1 to the network device 61, where the packet 1 carries the APN ID 10.

S62: The network device 61 processes the packet 1 according to the assurance policy 10 corresponding to the APN ID 10, where the processing includes: sending the packet 1 to the host 50 via the network device 62.

During specific implementation, after receiving the packet 1, the network device 61 may obtain the APN ID 10 by parsing the packet 1, then determine, based on a local configuration, the assurance policy 10 corresponding to the APN ID 10, and then process the packet 1 according to the assurance policy 10. It should be noted that, in addition to carrying the APN ID 10, the packet 1 may further include a source address (namely, the IP address 10) and a destination address (namely, an IP address of the host 50) of the packet 1.

In one case, if a requirement of a service on the network 6 in a direction from the host 50 to the host 10 is consistent with a requirement of a service on the network 6 in a direction from the host 10 to the host 50, after S62, S63: The host 50 sends a packet 2 to the host 10 over the network 6 may be further included, where the packet 2 includes the APN ID 10, and processing of the packet 2 by the network 6 meets a requirement of the host 10 on the network 6. To be specific, after receiving the packet 1, the host 50 obtains the APN ID 10 in the packet 1, and then encapsulates the APN ID 10 into a packet from the host 50 to the host 10, to obtain the packet 2. In this implementation, as an ingress node of the network 6 in the direction from the host 50 to the host 10, the network device 62 also needs to obtain a correspondence between the APN ID 10 and an assurance policy 10', the assurance policy 10' can ensure that processing of the packet 2 from the network device 62 to the network device 61 meets the requirement of the host 10 on the network 6. In this way, the network device 62 may process the packet 2 according to the assurance policy 10'. The processing includes: sending the packet 2 to the host 10 via the network device 61.

In another case, if a requirement of a service on the network 6 in a direction from the host 50 to the host 10 is inconsistent with a requirement of a service on the network 6 in a direction from the host 10 to the host 50, after S62, S63: The host 50 sends a packet 2 to the host 10 over the network 6 may be further included, where the packet 2 includes the APN ID 50, and processing of packet 2 by the network 6 meets a requirement of the host 50 on the network 6. In this implementation, the host 50 also needs to receive the APN ID 50 that indicates the host 50 and that is sent by the APNM 30 via the DHCP server 20 (that is, before S63, as an execution body, the host 50 implements the method provided in the second possible implementation in this embodiment of this application). As an ingress node of the network 6 in the direction from the host 50 to the host 10, the network device 62 also needs to obtain a correspondence between the APN ID 50 and an assurance policy 50'. The assurance policy 50' can ensure that processing of the packet 2 from the network device 62 to the network device 61 meets a requirement of the host 50 on the network 6. In this way, the network device 62 may process the packet 2 according to the assurance policy 50', and the processing includes: sending the packet 2 to the host 10 via the network device 61.

It can be learned that, in the second possible implementation provided in this embodiment of this application, a DHCP server can send, to a host, a response message that is used to feed back an IP address and that includes an APN ID indicating the host. During network initialization, the APN ID is sent to the host through an option of the DHCP, to complete host-level APN ID distribution. This makes it possible to subsequently implement host-level service assurance based on the APN6 technology.

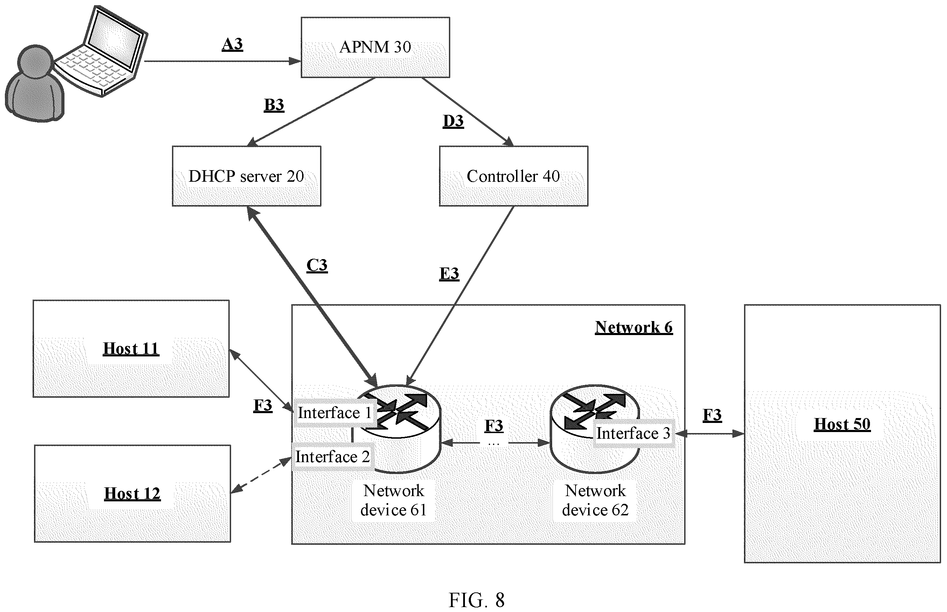

For a third possible implementation, an applicable scenario may be, for example, shown in FIG. 8. Refer to FIG. 8. The scenario may include a host 11, a host 12, a DHCP server 20, an APNM 30, a controller 40, a host (or an application server) 50, and a network 60. The network 60 includes a network device 61 connected to the host 11 and the host 12, and a network device 62 connected to the host (or the application server) 50. Each of the host 11 and the host 12 may include at least one application. This embodiment of this application may be applied to a case in which the network device 61 obtains, by interacting with the DHCP server 20, APN configuration information of a host and/or an application that access/accesses the network 6 via the network device 61, or may be applied to a case in which the network device 62 obtains, by interacting with the DHCP server 20, APN configuration information of a host and/or an application that access/accesses the network 6 via the network device 62. Specific implementations of the two cases are the same. The following uses the case in which the network device 61 obtains, by interacting with the DHCP server 20, the APN configuration information of the host and/or the application that access/accesses the network 6 via the network device 61 as an example for description.

The DHCP server 20 is configured to manage and allocate an IP address in a centralized manner, so that a host or a network device (for example, a gateway) in the network dynamically obtains information such as an IP address and a DNS server address.

The APNM 30 is configured to manage and plan an APN ID, synchronize a planned APN ID to the DHCP server 20, and send the planned APN ID (or a correspondence between the APN ID and an assurance policy) to the controller 40.

The controller 40 is configured to obtain an APN ID, determine an assurance policy corresponding to the APN ID, and send a correspondence between the APN ID and the assurance policy to an ingress node (namely, the network device 61) of the network 6. Alternatively, the controller 40 is configured to obtain a correspondence between an APN ID and an assurance policy, and send the correspondence between the APN ID and the assurance policy to an ingress node (namely, the network device 61) of the network 6.

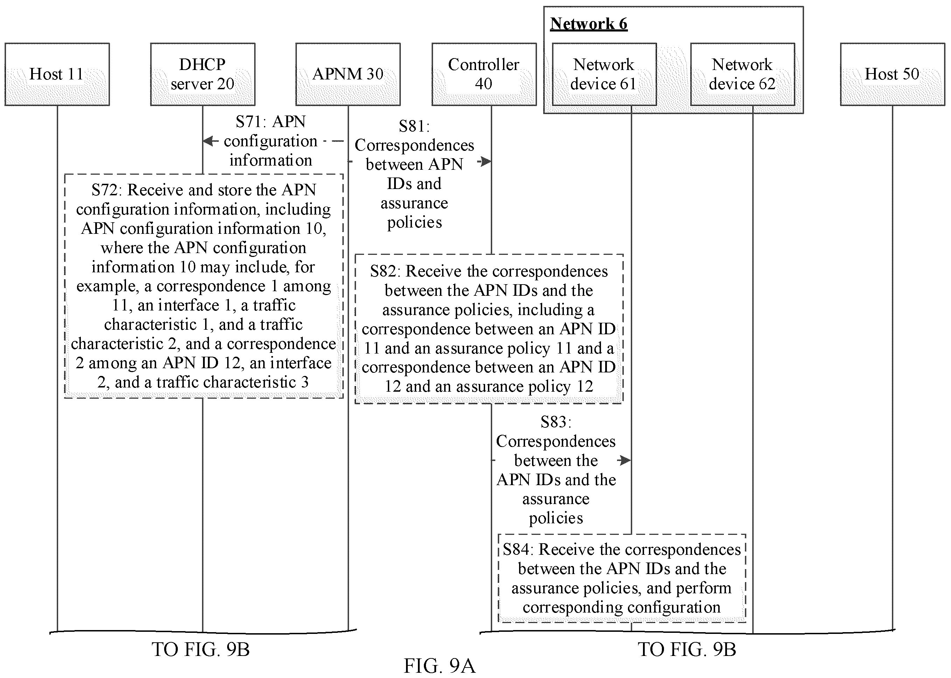

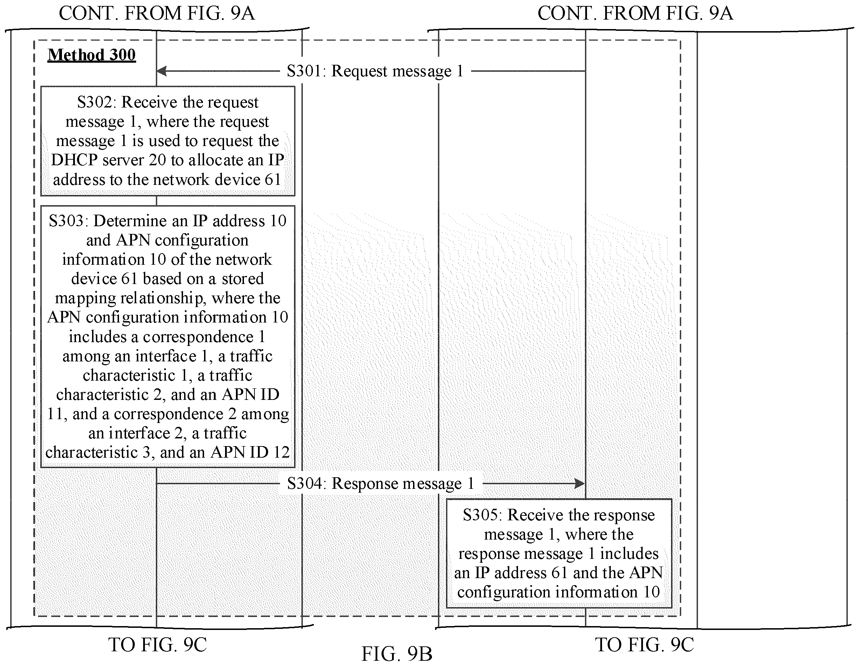

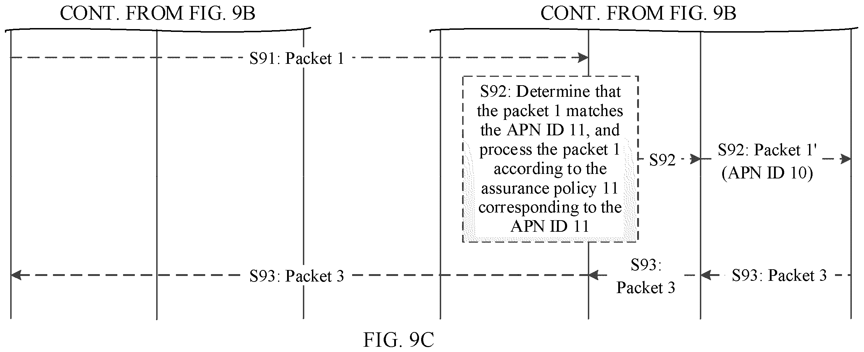

FIG. 9A to FIG. 9C are a schematic flowchart of a method 300 for obtaining an APN ID according to an embodiment of this application. The method 300 is applicable to the scenario shown in FIG. 8. For ease of understanding, interaction between the network device 61 and the DHCP server 20 in FIG. 8 is used to describe this embodiment of this application. In this embodiment of this application, the network device 61 not only has a function 1: performing the method 300 to obtain APN configuration information of a host and/or an application that access/accesses the network 6 via the network device 61, but also has a function 2: The ingress node obtains the correspondence that is between the APN ID and the assurance policy and that is sent by the controller 40, and processes a received packet according to an assurance policy corresponding to an APN ID in the packet. However, in an actual scenario, network devices having the function 1 and the function 2 may be two different network devices, and regardless of whether the function 1 and the function 2 are implemented on one network device, implementation of this embodiment of this application is not affected.

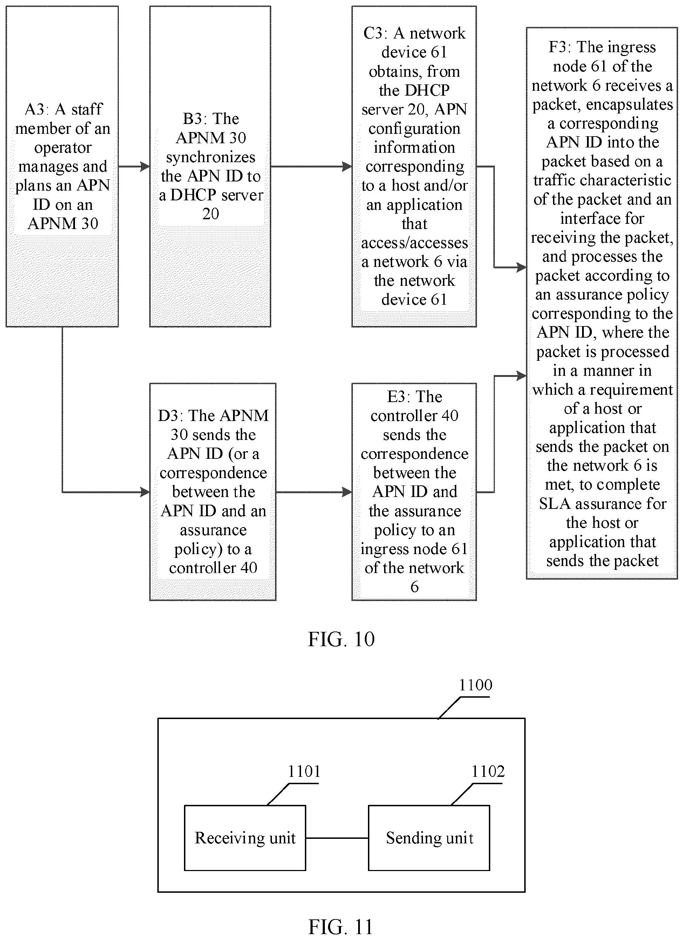

It should be noted that, in the scenario shown in FIG. 8, for an overall procedure of implementing a host-level or application-level APN6 technology, refer to FIG. 10. For example, the overall procedure may include: A3: A staff member of an operator manages and plans an APN ID on the APNM 30. B3: The APNM 30 synchronizes the APN ID to the DHCP server 20. C3: The network device 61 obtains, from the DHCP server 20, APN configuration information corresponding to a host and/or an application that access/accesses the network 6 via the network device 61. D3: The APNM 30 sends the APN ID (or a correspondence between the APN ID and an assurance policy) to the controller 40. E3: The controller 40 sends the correspondence between the APN ID and the assurance policy to the ingress node 61 of the network 6. F3: The ingress node 61 of the network 6 receives a packet, encapsulates a corresponding APN ID into the packet based on a traffic characteristic of the packet and an interface for receiving the packet, and processes the packet according to an assurance policy corresponding to the APN ID, where the packet is processed in a manner in which a requirement of a host or application that sends the packet on the network 6 is met, to complete SLA assurance for the host or application that sends the packet. The method 300 relates to C3. For ease of understanding by a reader, other interactions in the overall procedure are also reflected in FIG. 9A to FIG. 9C in a dashed line manner. FIG. 9A to FIG. 9C further include: interaction between the APNM 30 and the DHCP server 20 (namely, B3), interaction between the APNM 30 and the controller 40 (namely, D3), interaction between the controller 40 and the network device 61 (namely, E3), and interaction between the host 10 and the host 50 (namely, F3).

During specific implementation, for C3, the method 300 may include, for example, S301 to S305.

S301: The network device 61 sends a request message 1 to the DHCP server 20, where the request message 1 is used to request the DHCP server 20 to allocate an IP address to the network device 61.

S302: The DHCP server 20 receives the request message 1 sent by the network device 61.

S303: The DHCP server 20 determines an IP address 61 and APN configuration information 10 of the network device 61 based on a stored mapping relationship, where the mapping relationship includes a correspondence between the IP address 61 and the APN configuration information 10 of the network device 61. The APN configuration information 10 includes a correspondence 1 among an interface 1, a traffic characteristic 1, a traffic characteristic 2, and an APN ID 11, and a correspondence 2 among an interface 2, a traffic characteristic 3, and an APN ID 12. The APN configuration information 10 is used to enable the network device 61 to include the APN ID 11 in traffic 1 that is received from the interface 1 and that matches the traffic characteristic 1 and traffic 2 that matches the traffic characteristic 2. The APN configuration information 10 is further used to enable the network device 61 to include the APN ID 12 in traffic 3 that is received from the interface 2 and that matches the traffic characteristic 3. The APN ID 11 is used to enable the network 6 to perceive requirements of the traffic 1 and the traffic 2 on the network 6. The APN ID 12 is used to enable the network 6 to perceive a requirement of the traffic 3 on the network 6. The IP address 61 is used by the network device 61 as an IP address for interacting with another device.

APN configuration information may include, for example, at least one group of correspondences, and one group of correspondences includes a correspondence among an interface, at least one traffic characteristic, and an APN ID. A traffic characteristic refers to information that can identify specific traffic. For example, a traffic characteristic may be all or a part of a 5-tuple (namely, a source MAC address, a destination MAC address, a source IP address, a destination IP address, and a port number) of traffic.

Before S303, the method may further include: The DHCP server 20 obtains the mapping relationship. In a first case, the mapping relationship stored on the DHCP server 20 may be generated and stored by the DHCP server 20 in response to a configuration of a user after the user performs manual configuration on the DHCP server 20. In a second case, the mapping relationship stored on the DHCP server 20 may be synchronized by the APNM 30 to the DHCP server 20, that is, the DHCP server 20 receives and stores the mapping relationship sent by the APNM 30.

For the second case, before S303, A3: A staff member of an operator manages and plans an APN ID on the APNM 30, and B3: The APNM 30 synchronizes the APN ID and a corresponding interface and traffic characteristic to the DHCP server 20 may be further included. For example, B3 may include S71 and S72 in FIG. 9A to FIG. 9C.

S71: The APNM 30 sends APN configuration information to the DHCP server 20, where the APN configuration information includes the APN configuration information 10, and the APN configuration information 10 may include, for example, the correspondence 1 among APN ID 11, the interface 1, the traffic characteristic 1, and the traffic characteristic 2, and the correspondence 2 among the APN ID 12, the interface 2, and the traffic characteristic 3.

S72: The DHCP server 20 receives and stores the APN configuration information.

In this way, the DHCP server 20 stores the correspondence between the APN configuration information 10 and the IP address 61, to provide a data basis for performing S303.

It should be noted that there is no limitation on a sequence of performing S71 and S72, and S301 and S302. S71 and S72 may be performed before S301 and S302, or S301 and S302 may be performed before S71 and S72, or S71 and S72, and S301 and S302 may be performed simultaneously.

During specific implementation, S303 may include: The DHCP server 20 searches the mapping relationship for a correspondence matching the request message 1, records an IP address in the correspondence as the IP address 61, and records APN configuration information in the correspondence as the APN configuration information 10. In an example, an index of the mapping relationship may be a MAC address, that is, the mapping relationship includes a correspondence among a MAC address 61, the IP address 61, and the APN configuration information 10. After receiving the request message 1, the DHCP server 20 parses the request message 1 to obtain that a source MAC address of the request message 1 is the MAC address 61, searches the mapping relationship for a correspondence matching the MAC address 61, records an IP address in the correspondence as the IP address 61, and records APN configuration information in the correspondence as the APN configuration information 10.

S304: The DHCP server 20 sends a response message 1 to the network device 61, where the response message 1 includes the IP address 61 and the APN configuration information 10.

S305: The network device 61 receives the response message 1 sent by the DHCP server 20.

During specific implementation, after S303, the DHCP server 20 may generate the response message 1 corresponding to the request message 1, and send the response message 1 to the network device 61 in response to the received request message 1. In addition to the IP address 61 requested by the network device 61, the response message 1 further includes the APN configuration information 10 that can indicate the host and/or the application that access/accesses the network 6 via the network device 61. The network device 61 performs configuration based on the APN configuration information 10, to meet a requirement of a packet from the host or the application on the network 6. For example, after the APN ID 11 is included in a packet that is received from the interface 1 and that matches the traffic characteristic 1, the packet is processed according to the assurance policy 11 corresponding to the APN ID 11, to meet a requirement of the packet on the network 6. For another example, after the APN ID 11 is included in a packet that is received from the interface 1 and that matches the traffic characteristic 2, the packet is processed according to the assurance policy 11 corresponding to the APN ID 11, to meet a requirement of the packet on the network 6. For another example, after the APN ID 12 is included in a packet that is received from the interface 2 and that matches the traffic characteristic 3, the packet is processed according to the assurance policy 12 corresponding to the APN ID 12, to meet a requirement of the packet on the network 6.

An option in the response message 1 may be used to carry the APN configuration information 10. For example, two TLV fields may be extended for the option in the response message 1. One TLV field is used to carry the correspondence 1, that is, a correspondence among the interface 1, the traffic characteristic 1, the traffic characteristic 2, and the APN ID 11. The other TLV field is used to carry the correspondence 2, that is, a correspondence among the interface 2, the traffic characteristic 3, and the APN ID 12. To be specific, the DHCP server 20 may store the APN configuration information 10, and distribute the APN configuration information to the network device 61 through the option (for example, the TLV field in the option) when allocating an IP address to the network device 61.

In this way, after receiving the request message 1 that is sent by the network device 61 and that is used to request an IP address, the DHCP server 20 returns, to the network device 61, the request message 1 including both the APN configuration information 10 corresponding to each host and/or application that access/accesses the network 6 via the network device 61 and the requested IP address 61, so that the network device 61 quickly and conveniently obtains the APN ID that can indicate each host and/or application that access/accesses the network 6 via the network device 61 and that is perceived by the network 6, and subsequently, a packet sent by each host and/or application that access/accesses the network 6 via the network device 61 can be perceived by the network 6 and pertinently processed. This ensures a requirement of each host and/or application that access/accesses the network 6 via the network device 61 on the network 6.

After S305, F3 may be further included: Receive a packet, encapsulate a corresponding APN ID into the packet based on an interface for receiving the packet and a traffic characteristic of the packet, and process the packet according to an assurance policy corresponding to the APN ID. However, before F3 is performed, D3: Send the APN ID (or a correspondence between the APN ID and an assurance policy) to the controller 40, and E3: The controller 40 sends the correspondence between the APN ID and the assurance policy to the ingress node 61 of the network 6 may be further included. For example, D3 and E3 may include S81 to S84 in FIG. 9A to FIG. 9C, where S81 and S82 correspond to D3, S83 and S84 correspond to E3, and S81 to S84 may be, for example, as follows:
S81: The APNM 30 sends correspondences between APN IDs and assurance policies to the controller 40, including a correspondence between the APN ID 11 and the assurance policy 11 and a correspondence between the APN ID 12 and the assurance policy 12.
S82: The controller 40 receives the correspondences between the APN IDs and the assurance policies.
S83: The controller 40 sends the correspondences between the APN IDs and the assurance policies to the network device 61.
S84: The network device 61 receives the correspondences between the APN IDs and the assurance policies, and performs corresponding configuration.

The APN IDs and the corresponding assurance policies are configured on the ingress node (namely, the network device 61) of the network 6 through S81 to S84, so that the network device 61 can determine, for a packet carrying an APN ID, an assurance policy that needs to be used for the packet, and processing of the packet by the network 6 can meet a requirement of a host or an application to which the packet belongs on the network 6. In other words, both performing of S81 to S84 and performing of S301 to S305 prepare for subsequent F3.

In an example, F3 may include, for example, S91 and S92 in FIG. 9A to FIG. 9C.

S91: The host 11 sends a packet 1 to the interface 1 of the network device 61, where a traffic characteristic of the packet 1 corresponds to the traffic characteristic 1.

S92: The network device 61 determines that the packet 1 matches the APN ID 11, and processes the packet 1 according to the assurance policy 11 corresponding to the APN ID 11, where the processing includes: sending the packet 1 to the host 50 via the network device 62.

During specific implementation, after receiving the packet 1, the network device 61 determines that an inbound interface of the packet 1 is the interface 1, and the packet 1 matches the traffic characteristic 1. In this case, the network device 61 determines that the packet 1 corresponds to the APN ID 11. Therefore, the network device 61 may encapsulate the APN ID 11 into the packet 1 to obtain a packet 1', then, determine the assurance policy 11 corresponding to the APN ID 11, and process the packet 1' according to the assurance policy 11. It should be noted that the packet 1 may further include a source address (namely, an IP address of the host 11) and a destination address (namely, an IP address of the host 50) of the packet 1.

For example, this embodiment of this application may further include: The host 12 sends a packet 2 to an interface 2 of the network device 61, where a traffic characteristic of the packet 2 corresponds to the traffic characteristic 3; and the network device 61 determines that the packet 2 matches the APN ID 12, and processes the packet 2 according to the assurance policy 12 corresponding to the APN ID 12. The processing includes: sending the packet 2 to the host 50 via the network device 62.

In one case, if a requirement of a service on the network 6 in a direction from the host 50 to the host 11 is consistent with a requirement of a service on the network 6 in a direction from the host 11 to the host 50, after S92, S93: The host 50 sends a packet 3 to the host 10 over the network 6 may be further included, where processing of the packet 3 by the network 6 meets a requirement of the host 11 on the network 6. To be specific, after receiving the packet 1 (or the packet 1'), the host 50 determines the APN ID 11 matching the packet 1 (or the packet 1'), and then encapsulates the APN ID 11 into a packet from the host 50 to the host 11, to obtain the packet 3. In this implementation, as an ingress node of the network 6 in the direction from the host 50 to the host 11, the network device 62 also needs to obtain a correspondence between the APN ID 11 and an assurance policy 11', the assurance policy 11' can ensure that processing of the packet 3 from the network device 62 to the network device 61 meets the requirement of the host 11 on the network 6. In this way, the network device 62 may process the packet 3 according to the assurance policy 11'. The processing includes: sending the packet 3 to the host 11 via the network device 61.

In another case, if a requirement of a service on the network 6 in a direction from the host 50 to the host 11 is inconsistent with a requirement of a service on the network 6 in a direction from the host 11 to the host 50, after S92, S93: The host 50 sends a packet 3 to the host 11 over the network 6 may be further included, where processing of the packet 3 by the network 6 meets a requirement of the host 50 on the network 6. In this implementation, the network device 62 also needs to receive APN configuration information 50 sent by the APNM 30 via the DHCP server 20. The APN configuration information includes a correspondence among an interface 3, a traffic characteristic 4, and an APN ID 50 (that is, before S93, as an execution body, the host 50 implements the method provided in the third possible implementation in this embodiment of this application). As an ingress node of the network 6 in the direction from the host 50 to the host 11, the network device 62 also needs to obtain a correspondence between the APN ID 50 and an assurance policy 50'. The assurance policy 50' can ensure that processing of the packet 3 from the network device 62 to the network device 61 meets a requirement of the host 50 on the network 6. In this way, the network device 62 may process the packet 3 according to the assurance policy 50', and the processing includes: sending the packet 3 to the host 10 via the network device 61.

It can be learned that, in the third possible implementation provided in this embodiment of this application, a DHCP server can send, to a network device, a response message that is used to feed back an IP address and that includes APN configuration information of a host and/or an application that access/accesses a network via the network device. During network initialization, the APN configuration information is sent to the network device (for example, a gateway) through an option of the DHCP, to complete distribution of the APN configuration information related to the network device. This makes it possible to subsequently implement host-level and application-level service assurance based on the APN6 technology. In addition, in this implementation, the host or the application does not need to obtain the APN ID, and does not need to modify a to-be-sent packet (that is, does not need to include the APN ID in a to-be-sent packet). Instead, the network device connected to the host or the application end when the host or the application end accesses the network determines, based on the APN configuration information, an APN ID corresponding to a received packet, so that the network processes the packet according to an assurance policy corresponding to the APN ID, to meet a requirement of the host or the application that sends the packet.

Correspondingly, an embodiment of this application further provides an apparatus 1100 for obtaining an application-aware networking identifier, as shown in FIG. 11. The apparatus 1100 is used in a first device. The apparatus 1100 may include, for example, a receiving unit 1101 and a sending unit 1102. Specifically:
The receiving unit 1101 is configured to receive a first message sent by a second device, where the first message includes a first application-aware networking identifier, and the second device is configured to manage an application-aware networking identifier resource. The receiving unit 1101 may perform S04 shown in FIG. 1.

The sending unit 1102 is configured to send a first packet, where the first packet carries the first application-aware networking identifier, and the first application-aware networking identifier indicates application information to which the first packet belongs. The sending unit 1102 may perform S05 shown in FIG. 1.

In some implementations, the sending unit 1102 is further configured to: before the first message sent by the second device is received, send a second message to the second device, where the first message is a response message for the second message. The sending unit 1102 may perform S01 shown in FIG. 1.

In some implementations, the application information to which the first packet belongs reflects a first application to which the first packet belongs. This implementation corresponds to implementations corresponding to application-level APN IDs in the embodiments shown in FIG. 2 to FIG. 4 and in the embodiments shown in FIG. 8 to FIG. 10.

The first application-aware networking identifier is an APN ID corresponding to the first application, and the APN ID includes at least one of the following information: an APP GROUP ID, a USER GROUP ID, a FLOW ID, or an SLA.

In an example, the first device is an application device, the application device bears the first application, and the second device is a DNS server. In this case, the second message carries a first domain name, the second message is used to request an internet protocol IP address of the first domain name, and the first application-aware networking identifier matches the first domain name. The first message further includes a first IP address, the first IP address matches the first domain name, the first packet is used to access the first domain name, and a destination address of the first packet is the first IP address. For related descriptions of the example, refer to the method 100.

In this example, in one case, the application device is user equipment that bears the first application. In this case, the sending unit 1102 is specifically configured to send the first packet to an application server, where the application server is configured to provide a service for the first application. In this case, the receiving unit 1101 is further configured to receive a second packet sent by the application server, where the second packet carries a second application-aware networking identifier, and the second application-aware networking identifier indicates application information to which the second packet belongs. The second application-aware networking identifier is the same as the first application-aware networking identifier.

In another case, the application device is an application server that provides a service for the first application. In this case, the sending unit 1102 is specifically configured to send the first packet to user equipment, where the user equipment bears the first application.

In another example, the first device is a network device, the first application accesses a network via the network device, and the second device is a DHCP server. In this case, the second message is used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic. In this example, the apparatus 1100 may further include a processing unit. The receiving unit 1101 is further configured to receive, from the first interface, a second packet corresponding to the first application. The processing unit is configured to: determine that a traffic characteristic of the second packet matches the first traffic characteristic, and encapsulate the first application-aware networking identifier into the second packet, to obtain the first packet. For related descriptions of the example, refer to the related descriptions of the application-level APN ID in the method 300.

In some other implementations, the application information to which the first packet belongs reflects a first host to which the first packet belongs, and the first application-aware networking identifier is an APN ID corresponding to the first host. This implementation corresponds to implementations corresponding to host-level APN IDs in the embodiments shown in FIG. 5 to FIG. 7 and in the embodiments shown in FIG. 8 to FIG. 10.

In an example, the second device is a DHCP server, and the first device is the first host. In this case, the second message is used to request the DHCP server to allocate an IP address to the first host. The first message further includes a first IP address, the first IP address is the IP address allocated by the DHCP server to the first host, and the first IP address matches the first application-aware networking identifier. For related descriptions of the example, refer to the method 200.

In this example, the sending unit 1102 is specifically configured to send the first packet to a second host, where a source IP address of the first packet is the first IP address. In this case, the receiving unit 1101 is further configured to receive a second packet sent by the second host, where the second packet includes a second application-aware networking identifier, and the second application-aware networking identifier indicates application information to which the second packet belongs. The second application-aware networking identifier may be the same as the first application-aware networking identifier.

In another example, the second device is a DHCP server, the first device is a network device, and the first host accesses a network via the network device. In this case, the second message is used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic. For related descriptions of the example, refer to the related descriptions of the host-level APN ID in the method 300.

In this example, the apparatus 1100 may further include a processing unit. The receiving unit 1101 is specifically configured to receive, from the first interface, a second packet corresponding to the first host. The processing unit is configured to: determine that a traffic characteristic of the second packet matches the first traffic characteristic, and encapsulate the first application-aware networking identifier into the second packet, to obtain the first packet.

In some implementations, the first application-aware networking identifier is carried in an IPv6 packet header or an IPv6 extension header of the first packet.

In some implementations, the first message may further include a key. The apparatus may further include a verification unit. The verification unit is configured to verify, based on the key, whether the first application-aware networking identifier is tampered with.

It should be noted that the apparatus 1100 for obtaining an application-aware networking identifier is configured to perform operations of related parts of the method shown in FIG. 1, the method 100, the method 200, and the method 300. For specific implementations and achieved effects of the apparatus 1100, refer to the related descriptions of the foregoing method embodiments. Details are not described herein again.

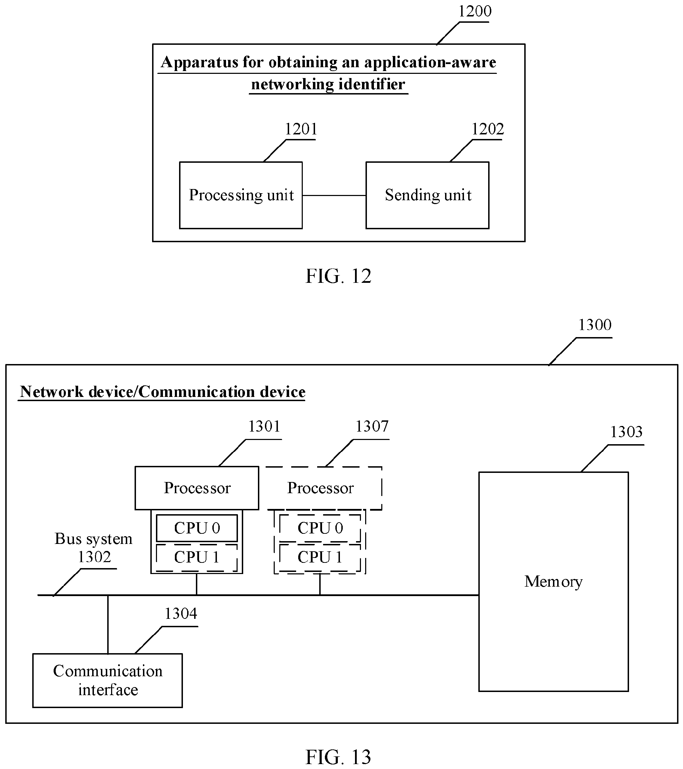

An embodiment of this application further provides an apparatus 1200 for obtaining an application-aware networking identifier, as shown in FIG. 12. The apparatus 1200 is used in a second device, and the second device is configured to manage an application-aware networking identifier resource. The apparatus 1200 may include, for example, a processing unit 1201 and a sending unit 1202. Specifically:
The processing unit 1201 is configured to obtain a first application-aware networking identifier from the application-aware networking identifier resource.

The sending unit 1202 is configured to send a first message including the first application-aware networking identifier to a first device, for the first device to include the first application-aware networking identifier in a sent first packet, where the first application-aware networking identifier indicates application information to which the first packet belongs. The sending unit 1202 may perform S03 shown in FIG. 1.

In some implementations, the apparatus 1200 may further include a receiving unit. The receiving unit is configured to: before the first message including the first application-aware networking identifier is sent to the first device, receive a second message sent by the first device, where the first message is a response message for the second message.

In some implementations, the application information to which the first packet belongs reflects a first application to which the first packet belongs. This implementation corresponds to implementations corresponding to application-level APN IDs in the embodiments shown in FIG. 2 to FIG. 4 and in the embodiments shown in FIG. 8 to FIG. 10.

The first application-aware networking identifier is an APN ID corresponding to the first application, and the APN ID includes at least one of the following information: an APP GROUP ID, a USER GROUP ID, a FLOW ID, or an SLA.

In an example, the second device is a DNS server, the first device is an application device, and the application device bears the first application. In this case, the second message carries a first domain name, and the second message is used to request an IP address of the first domain name. The processing unit 1201 is further configured to: obtain, from an A record, a first IP address matching the first domain name, obtain, from a TXT record, the first application-aware networking identifier matching the first domain name, and generate the first message, where the first message includes the first application-aware networking identifier and the first IP address. For a specific implementation, refer to the related descriptions of the method 100.

In this example, in one case, the application device is user equipment that bears the first application. The sending unit is further configured to: send a second application-aware networking identifier to an application server, where the application server is configured to provide a service for the first application, for the application server to include the second application-aware networking identifier in a sent second packet, and the second application-aware networking identifier indicates application information to which the second packet belongs.

In another case, the application device is an application server that provides a service for the first application.

In another example, the second device is a DHCP server, the first device is a network device, and the first application accesses a network via the network device. In this case, the second message is used to request the DHCP server to allocate an IP address to the network device. The first message further includes a first IP address, the first IP address corresponds to application-aware networking configuration information, and the application-aware networking configuration information includes a correspondence among the first application-aware networking identifier, a first interface, and a first traffic characteristic. The application-aware networking configuration information may be carried in an option field in the first message. For related descriptions of the example, refer to the related descriptions of the application-level APN ID in the method 300.

In some implementations, the application information to which the first packet belongs reflects a first host to which the first packet belongs, and the first application-aware networking identifier is an APN ID corresponding to the first host. This implementation corresponds to implementations corresponding to host-level APN IDs in the embodiments shown in FIG. 5 to FIG. 7 and in the embodiments shown in FIG. 8 to FIG. 10.

In an example, the second device is a DHCP server, and the first device is the first host. In this case, the second message is used to request the DHCP server to allocate an IP address to the first host. The first message further includes a first IP address, the first IP address is the IP address allocated by the DHCP server to the first host, and the first IP address matches the first application-aware networking identifier. For related descriptions of the example, refer to the method 200.

In this example, the sending unit 1202 is further configured to send a second application-aware networking identifier to a second host, for the second host to include the second application-aware networking identifier in a sent second packet, where the second application-aware networking identifier indicates application information to which the second packet belongs. The second application-aware networking identifier may be the same as the first application-aware networking identifier.

The first application-aware networking identifier may be carried in an option field in the first message.

In another example, the second device is a DHCP server, the first device is a network device, and the first host accesses a network via the network device. In this case, the second message is used to request the DHCP server to allocate an IP address to the network device. The first message further includes a first IP address, the first IP address corresponds to application-aware networking configuration information, the application-aware networking configuration information includes a correspondence among the first application-aware networking identifier, a first interface, and a first traffic characteristic, and the application-aware networking configuration information indicates the network device to encapsulate the first application-aware networking identifier into traffic that is received from the interface and whose traffic characteristic matches the first traffic characteristic. For related descriptions of the example, refer to the related descriptions of the host-level APN ID in the method 300.

The application-aware networking configuration information may be carried in an option field in the first message.

In some implementations, the first message further includes a key, and the key is used to verify whether the first application-aware networking identifier is tampered with.

It should be noted that the apparatus 1200 for obtaining an application-aware networking identifier is configured to perform operations of related parts of the method shown in FIG. 1, the method 100, the method 200, and the method 300. For specific implementations and achieved effects of the apparatus 1200, refer to the related descriptions of the foregoing method embodiments. Details are not described herein again.

Refer to FIG. 13. An embodiment of this application provides a network device 1300 (which may also be referred to as a communication device 1300). The network device 1300 may be the first device in any one of the foregoing embodiments, and implements various functions of the first device in the foregoing embodiments. For example, the network device 1300 may be the first device in FIG. 1, or may be the user equipment 10 or the application server 50 in the method 100, or may be the host 10 in the method 200, or may be the network device 61 in the method 300. Alternatively, the network device 1300 may be the second device in any one of the foregoing embodiments, and implements various functions of the second device in the foregoing embodiments. For example, the network device 1300 may be the second device in FIG. 1, or may be the DNS server 20 in the method 100, or may be the DHCP server 20 in the method 200, or may be the DHCP server 20 in the method 300.

The network device 1300 includes at least one processor 1301, a bus system 1302, a memory 1303, and at least one communication interface 1304.

The network device 1300 is an apparatus of a hardware structure, and may be configured to implement a functional module in the apparatus 1100 for obtaining an application-aware networking identifier shown in FIG. 11. For example, a person skilled in the art may figure out that the receiving unit 1101 and the sending unit 1102 in the apparatus 1100 for obtaining an application-aware networking identifier shown in FIG. 11 may be implemented by invoking code in the memory 1303 by the at least one processor 1301. The network device 1300 may alternatively be configured to implement a functional module in the apparatus 1200 for obtaining an application-aware networking identifier shown in FIG. 12. For example, a person skilled in the art may figure out that the processing unit 1201 and the sending unit 1202 in the apparatus 1200 for obtaining an application-aware networking identifier shown in FIG. 12 may be implemented by invoking code in the memory 1303 by the at least one processor 1301.

Optionally, the network device 1300 may alternatively be configured to implement a function of the network device in any one of the foregoing embodiments.

Optionally, the processor 1301 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The bus system 1302 may include a path for information transfer between the foregoing components.

The communication interface 1304 is configured to communicate with another device or a communication network.

The memory 1303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through a bus. The memory may alternatively be integrated with the processor.

The memory 1303 is configured to store application program code for executing the solutions of this application, and the processor 1301 controls execution. The processor 1301 is configured to execute the application program code stored in the memory 1303, to implement a function in the method in this application.

During specific implementation, in an embodiment, the processor 1301 may include one or more CPUs such as a CPU 0 and a CPU 1 in FIG. 13.

During specific implementation, in an embodiment, the network device 1300 may include a plurality of processors such as the processor 1301 and a processor 1307 in FIG. 13. Each of the processors may be a single-core (single-CPU) processor, or may be a multi-core (multi-CPU) processor. The processor herein may be one or more devices, circuits, and/or processing cores for processing data (for example, computer program instructions).

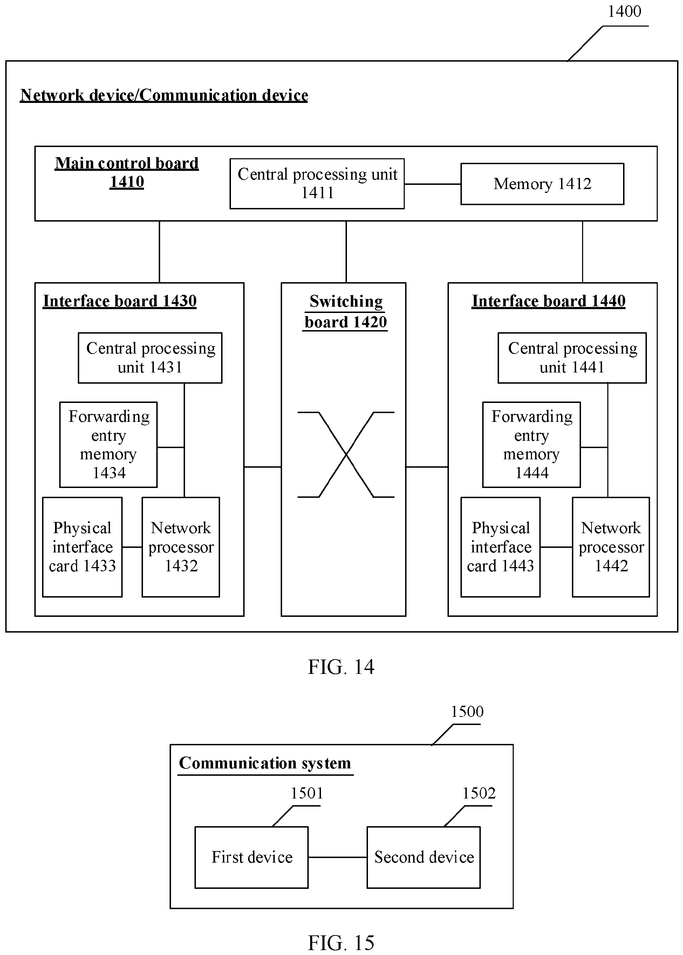

FIG. 14 is a diagram of a structure of another network device 1400 (which may also be referred to as a communication device 1400) according to an embodiment of this application. The network device 1400 may be the first device in any one of the foregoing embodiments, and implements various functions of the first device in the foregoing embodiments. For example, the network device 1400 may be the first device in FIG. 1, or may be the user equipment 10 or the application server 50 in the method 100, or may be the host 10 in the method 200, or may be the network device 61 in the method 300. Alternatively, the network device 1400 may be the second device in any one of the foregoing embodiments, and implements various functions of the second device in the foregoing embodiments. For example, the network device 1400 may be the second device in FIG. 1, or may be the DNS server 20 in the method 100, or may be the DHCP server 20 in the method 200, or may be the DHCP server 20 in the method 300.

The network device 1400 includes a main control board 1410 and an interface board 1430.

The main control board 1410 is also referred to as a main processing unit (main processing unit, MPU) or a route processor card (route processor card). The main control board 1410 controls and manages components in the network device 1400, including functions of route calculation, device management, device maintenance, and protocol processing. The main control board 1410 includes a central processing unit 1411 and a memory 1412.

The interface board 1430 is also referred to as a line processing unit (line processing unit, LPU), a line card (line card), or a service board. The interface board 1430 is configured to provide various service interfaces and implement data packet forwarding. The service interface includes but is not limited to an Ethernet interface and a POS (Packet over SONET/SDH) interface. The Ethernet interface is, for example, a flexible Ethernet service interface (Flexible Ethernet Clients, FlexE Clients). The interface board 1430 includes a central processing unit 1431, a network processor 1432, a forwarding entry memory 1434, and a physical interface card (physical interface card, PIC) 1433.

The central processing unit 1431 on the interface board 1430 is configured to control and manage the interface board 1430, and communicate with the central processing unit 1411 on the main control board 1410.

The network processor 1432 is configured to implement packet forwarding. A form of the network processor 1432 may be a forwarding chip. Specifically, processing on an uplink packet includes processing at a packet inbound interface, and forwarding table lookup, and processing on a downlink packet includes forwarding table lookup, and the like.

The physical interface card 1433 is configured to implement an interconnection function at a physical layer. Original traffic enters the interface board 1430 from the physical interface card 1433, and a processed packet is sent from the physical interface card 1433. The physical interface card 1433 includes at least one physical interface. The physical interface is also referred to as a physical interface. The physical interface card 1433 corresponds to a FlexE physical interface in a system architecture. The physical interface card 1433, also referred to as a subcard, may be installed on the interface board 1430, and is responsible for converting an optical/electrical signal into a packet, performing validity check on the packet, and forwarding the packet to the network processor 1432 for processing. In some embodiments, the central processing unit 1431 on the interface board 1430 may also implement a function of the network processor 1432, for example, implement software forwarding based on a general-purpose CPU. In this case, the network processor 1432 is not required in the physical interface card 1433.

Optionally, the network device 1400 includes a plurality of interface boards. For example, the network device 1400 further includes an interface board 1440. The interface board 1440 includes a central processing unit 1441, a network processor 1442, a forwarding entry memory 1444, and a physical interface card 1443.

Optionally, the network device 1400 further includes a switching board 1420. The switching board 1420 may also be referred to as a switch fabric unit (switch fabric unit, SFU). When the network device has a plurality of interface boards 1430, the switching board 1420 is configured to complete data exchange between the interface boards. For example, the interface board 1430 and the interface board 1440 may communicate with each other via the switching board 1420.

The main control board 1410 is coupled to the interface board 1430. For example, the main control board 1410, the interface board 1430, the interface board 1440, and the switching board 1420 are connected to a system backplane through a system bus to implement interworking. In a possible implementation, an inter-process communication (inter-process communication, IPC) channel is established between the main control board 1410 and the interface board 1430, and the main control board 1410 and the interface board 1430 communicate with each other through the IPC channel.

Logically, the network device 1400 includes a control plane and a forwarding plane. The control plane includes the main control board 1410 and the central processing unit 1431. The forwarding plane includes components that perform forwarding, for example, the forwarding entry memory 1434, the physical interface card 1433, and the network processor 1432. The control plane implements functions such as a router, generating a forwarding table, processing signaling and protocol packets, and configuring and maintaining a status of a device. The control plane delivers the generated forwarding table to the forwarding plane. On the forwarding plane, the network processor 1432 performs table lookup and forwarding on a packet received by the physical interface card 1433 based on the forwarding table delivered by the control plane. The forwarding table delivered by the control plane may be stored in the forwarding entry memory 1434. In some embodiments, the control plane and the forwarding plane may be completely separated, and are not on a same device.

In an example, if the network device 1400 is configured as a first device, the network processor 1432 may trigger the physical interface card 1433 to receive a first message sent by a second device, where the first message includes a first application-aware networking identifier, and the second device is configured to manage an application-aware networking identifier resource. The network processor 1432 may further trigger the physical interface card 1433 to send a first packet, where the first packet carries the first application-aware networking identifier, and the first application-aware networking identifier indicates application information to which the first packet belongs.

It should be understood that the receiving unit 1101 and the sending unit 1102 in the apparatus 1100 for obtaining an application-aware networking identifier, and the communication interface 1304 in the network device 1300 may be equivalent to the physical interface card 1433 or the physical interface card 1443 in the network device 1400. The processing unit in the apparatus 1100 for obtaining an application-aware networking identifier and the processor 1301 in the network device 1300 may be equivalent to the central processing unit 1411 or the central processing unit 1431 in the network device 1400.

It should be understood that, in this embodiment of this application, an operation on the interface board 1440 is consistent with an operation on the interface board 1430. For brevity, details are not described again. It should be understood that the network device 1400 in this embodiment may correspond to the packet processing apparatus or the network device in the foregoing method embodiments, the main control board 1410, the interface board 1430, and/or the interface board 1440 in the network device 1400 may implement functions and/or various steps implemented in the apparatus 1100 for obtaining an application-aware networking identifier or the network device 1300 in the foregoing method embodiments. For brevity, details are not described herein again.

In another example, if the network device 1400 is configured as a second device, the network processor 1432 may trigger the physical interface card 1433 to send a first message including a first application-aware networking identifier to a first device, for the first device to include the first application-aware networking identifier in a sent first packet, where the first application-aware networking identifier indicates application information to which the first packet belongs. The central processing unit 1411 may obtain the first application-aware networking identifier from an application-aware networking identifier resource.

It should be understood that the sending unit 1202 in the apparatus 1200 for obtaining an application-aware networking identifier and the communication interface 1304 in the network device 1300 may be equivalent to the physical interface card 1433 or the physical interface card 1443 in the network device 1400. The processing unit 1201 in the apparatus 1200 for obtaining an application-aware networking identifier and the processor 1301 in the network device 1300 may be equivalent to the central processing unit 1411 or the central processing unit 1431 in the network device 1400.

It should be understood that, in this embodiment of this application, an operation on the interface board 1440 is consistent with an operation on the interface board 1430. For brevity, details are not described again. It should be understood that the network device 1400 in this embodiment may correspond to the packet processing apparatus or the network device in the foregoing method embodiments, the main control board 1410, the interface board 1430, and/or the interface board 1440 in the network device 1400 may implement functions and/or various steps implemented in the apparatus 1200 for obtaining an application-aware networking identifier or the network device 1300 in the foregoing method embodiments. For brevity, details are not described herein again.

It may be understood that, there may be one or more main control boards. When there are a plurality of main control boards, the main control boards may include an active main control board and a standby main control board. There may be one or more interface boards. A stronger data processing capability of the network device indicates a larger quantity of provided interface boards. There may also be one or more physical interface cards on the interface board. There may be no switching board or one or more switching boards. When there are a plurality of switching boards, load sharing and redundancy backup may be implemented together. In a centralized forwarding architecture, the network device may not need a switching board, and the interface board provides a function of processing service data of an entire system. In a distributed forwarding architecture, the network device may include at least one switching board, and data exchange between a plurality of interface boards is implemented via the switching board, to provide a large-capacity data exchange and processing capability. Therefore, a data access and processing capability of the network device in the distributed architecture is greater than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained after the two central processing units are combined. This form of device (for example, a network device like a low-end switch or a router) has a weak data exchange and processing capability. A specific architecture that is to be used depends on a specific networking deployment scenario.

In some possible embodiments, each of the foregoing network devices or network devices may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as each device in embodiments of this application. For example, each network device or network device may be implemented based on a general-purpose physical server with reference to a network functions virtualization (Network Functions Virtualization, NFV) technology. Each network device or network device is a virtual host, a virtual router, or a virtual switch. After reading this application, with reference to the NFV technology, a person skilled in the art may virtualize, on the general-purpose physical server, the network devices or network devices having the foregoing functions. Details are not described herein again.

It should be understood that the network devices in the foregoing various product forms respectively have any functions of the network devices or communication devices in the foregoing method embodiments. Details are not described herein again.

An embodiment of this application further provides a chip, including a processor and an interface circuit. The interface circuit is configured to receive instructions and transmit the instructions to the processor. The processor may be, for example, a specific implementation form of the packet processing apparatus in embodiments of this application, and may be configured to perform the foregoing packet processing method. The processor is coupled to a memory. The memory is configured to store a program or instructions. When the program or the instructions are executed by the processor, a chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor such as a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system-on-chip (system-on-chip, SoC), a central processing unit (central processing unit, CPU), a network processor (network processor, NP), a digital signal processing circuit (digital signal processor, DSP), a micro controller unit (micro controller unit, MCU), or a programmable controller (programmable logic device, PLD) or another integrated chip.

In addition, an embodiment of this application further provides a communication system 1500. Refer to FIG. 15. The communication system 1500 may include a first device 1501 and a second device 1502. The first device 1501 is configured to perform a step corresponding to the first device in any possible implementation of the foregoing method. The second device 1502 is configured to perform a step corresponding to the second device in any possible implementation of the foregoing method.

In addition, an embodiment of this application further provides a computer-readable storage medium. The computer-readable storage medium stores program code or instructions. When the program code or the instructions are run on a computer, the computer is enabled to perform the method in any implementation of the method shown in FIG. 1, the method 100, the method 200, or the method 300.

In addition, an embodiment of this application further provides a computer program product. When the computer program product runs on a computer, the computer is enabled to perform the method in any implementation of the method shown in FIG. 1, the method 100, the method 200, or the method 300.

It should be understood that "determining B based on A" mentioned in embodiments of this application does not mean that B is determined based only on A, and B may be determined based on A and/or other information.

"First" in names such as "first packet" mentioned in this application is merely used as a name identifier, and does not represent the first in a sequence. This rule is also applicable to the "second", and the like.

From the foregoing descriptions of the foregoing implementations, a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device like a router) to perform the methods described in embodiments or some parts of embodiments of this application.

Embodiments in this specification are all described in a progressive manner, for same or similar parts in embodiments, reference may be made to these embodiments, and each embodiment focuses on a difference from other embodiments. Especially, system embodiments and device embodiments are basically similar to method embodiments, and therefore are described briefly. For related parts, refer to partial description in the method embodiments. The described device and system embodiments are merely examples. The modules described as separate parts may or may not be physically separate, and parts displayed as modules may or may not be physical modules, may be located in one position, or may be distributed on a plurality of network units. Some or all of the modules may be selected based on actual requirements to achieve the objectives of the solutions in embodiments. A person of ordinary skill in the art may understand and implement embodiments without creative efforts.

The foregoing merely describes example implementations of this application, and is not intended to limit the protection scope of this application. It should be noted that a person of ordinary skill in the art may make some improvements and polishing without departing from this application, and the improvements and polishing shall fall within the protection scope of this application.

## Claims

1. A method for obtaining an application-aware networking identifier, applied to a first device, wherein the method comprises:
receiving a first message sent by a second device, wherein the first message comprises a first application-aware networking identifier, the second device is configured to manage an application-aware networking identifier resource, and the first application-aware networking identifier is an application-aware networking identifier in the application-aware networking identifier resource; and
sending a first packet, wherein the first packet carries the first application-aware networking identifier, and the first application-aware networking identifier indicates application information to which the first packet belongs.

2. The method according to claim 1, wherein before the receiving a first message sent by a second device, the method further comprises:
sending a second message to the second device, wherein the first message is a response message for the second message.

3. The method according to claim 1 or 2, wherein the application information to which the first packet belongs reflects a first application to which the first packet belongs, and the first application-aware networking identifier is an APN ID corresponding to the first application.

4. The method according to claim 3, wherein the first device is an application device, the first application is installed on the application device, and the second device is a domain name system DNS server.

5. The method according to claim 4, wherein the first message further comprises a first IP address, wherein the first IP address matches a first domain name, the first application-aware networking identifier matches the first domain name, the first packet is used to access the first domain name, and a destination address of the first packet is the first IP address.

6. The method according to claim 4 or 5, wherein the application device is user equipment on which the first application is installed; and the sending a first packet comprises:
sending the first packet to an application server, wherein the application server is configured to provide a service for the first application; and
the method further comprises:
receiving a second packet sent by the application server, wherein the second packet carries a second application-aware networking identifier, and the second application-aware networking identifier indicates application information to which the second packet belongs.

7. The method according to claim 6, wherein the second application-aware networking identifier is the same as the first application-aware networking identifier.

8. The method according to claim 4 or 5, wherein the application device is an application server that provides a service for the first application; and the sending a first packet comprises:
sending the first packet to user equipment, wherein the user equipment bears the first application.

9. The method according to claim 3, wherein the first device is a network device, the first application accesses a network via the network device, and the second device is a dynamic host configuration protocol DHCP server.

10. The method according to claim 9, wherein the first message further comprises a first IP address, the first IP address corresponds to application-aware networking configuration information, and the application-aware networking configuration information comprises a correspondence among the first application-aware networking identifier, a first interface, and a first traffic characteristic.

11. The method according to claim 10, wherein the method further comprises:
receiving, from the first interface, a second packet corresponding to the first application;
determining that a traffic characteristic of the second packet matches the first traffic characteristic; and
encapsulating the first application-aware networking identifier into the second packet, to obtain the first packet.

12. The method according to claim 1 or 2, wherein the application information to which the first packet belongs reflects a first host to which the first packet belongs, and the first application-aware networking identifier is an APN ID corresponding to the first host.

13. The method according to claim 12, wherein the second device is a DHCP server, and the first device is the first host.

14. The method according to claim 13, wherein the first message further comprises a first IP address, the first IP address is an IP address allocated by the DHCP server to the first host, and the first IP address matches the first application-aware networking identifier.

15. The method according to claim 14, wherein the sending a first packet comprises:
sending the first packet to a second host, wherein a source IP address of the first packet is the first IP address; and
the method further comprises:
receiving a second packet sent by the second host, wherein the second packet comprises a second application-aware networking identifier, and the second application-aware networking identifier indicates application information to which the second packet belongs.

16. The method according to claim 15, wherein the second application-aware networking identifier is the same as the first application-aware networking identifier.

17. The method according to claim 12, wherein the second device is a DHCP server, the first device is a network device, and the first host accesses a network via the network device.

18. The method according to claim 17, wherein the first message further comprises a first IP address, the first IP address corresponds to application-aware networking configuration information, and the application-aware networking configuration information comprises a correspondence among the first application-aware networking identifier, a first interface, and a first traffic characteristic.

19. The method according to claim 18, wherein the method further comprises:
receiving, from the first interface, a second packet corresponding to the first host;
determining that a traffic characteristic of the second packet matches the first traffic characteristic; and
encapsulating the first application-aware networking identifier into the second packet, to obtain the first packet.

20. The method according to any one of claims 1 to 19, wherein the first application-aware networking identifier is carried in an internet protocol version 6 IPv6 packet header or an IPv6 extension header of the first packet.

21. The method according to any one of claims 1 to 20, wherein the first message further comprises a key; and the method further comprises:
verifying, based on the key, whether the first application-aware networking identifier is tampered with.

22. The method according to any one of claims 1 to 21, wherein the first application-aware networking identifier comprises at least one of the following information: an application group identifier APP GROUP ID, a user group identifier USER GROUP ID, a flow identifier FLOW ID, or a service level agreement SLA.

23. A method for obtaining an application-aware networking identifier, applied to a second device, wherein the second device is configured to manage an application-aware networking identifier resource; and the method comprises:
obtaining a first application-aware networking identifier from the application-aware networking identifier resource; and
sending a first message comprising the first application-aware networking identifier to a first device, for the first device to comprise the first application-aware networking identifier in a sent first packet, wherein the first application-aware networking identifier indicates application information to which the first packet belongs.

24. The method according to claim 23, wherein before the sending a first message comprising the first application-aware networking identifier to a first device, the method further comprises:
receiving a second message sent by the first device, wherein the first message is a response message for the second message.

25. The method according to claim 23 or 24, wherein the application information to which the first packet belongs reflects a first application to which the first packet belongs, and the first application-aware networking identifier is an APN ID corresponding to the first application.

26. The method according to claim 25, wherein the second device is a domain name system DNS server, the first device is an application device, and the application device bears the first application.

27. The method according to claim 26, wherein the first message further comprises a first IP address; and the method further comprises:
obtaining, from an A record, the first IP address matching a first domain name;
obtaining, from a TXT record, the first application-aware networking identifier matching the first domain name; and
generating the first message, wherein the first message comprises the first application-aware networking identifier and the first IP address.

28. The method according to claim 27, wherein the application device is user equipment that bears the first application; and the method further comprises:
sending a second application-aware networking identifier to an application server, wherein the application server is configured to provide a service for the first application, for the application server to comprise the second application-aware networking identifier in a sent second packet, and the second application-aware networking identifier indicates application information to which the second packet belongs.

29. The method according to claim 27, wherein the application device is an application server that provides a service for the first application.

30. The method according to claim 25, wherein the second device is a dynamic host configuration protocol DHCP server, the first device is a network device, and the first application accesses a network via the network device.

31. The method according to claim 30, wherein the second message is used to request the DHCP server to allocate an IP address to the network device, the first message further comprises a first IP address, the first IP address corresponds to application-aware networking configuration information, and the application-aware networking configuration information comprises a correspondence among the first application-aware networking identifier, a first interface, and a first traffic characteristic.

32. The method according to claim 31, wherein the application-aware networking configuration information is carried in an option field in the first message.

33. The method according to claim 23 or 24, wherein the application information to which the first packet belongs reflects a first host to which the first packet belongs, and the first application-aware networking identifier is an APN ID corresponding to the first host.

34. The method according to claim 33, wherein the second device is a DHCP server, and the first device is the first host.

35. The method according to claim 34, wherein the first message further comprises a first IP address, the first IP address is an IP address allocated by the DHCP server to the first host, and the first IP address matches the first application-aware networking identifier.

36. The method according to claim 35, wherein the method further comprises:
sending a second application-aware networking identifier to a second host, for the second host to comprise the second application-aware networking identifier in a sent second packet, wherein the second application-aware networking identifier indicates application information to which the second packet belongs.

37. The method according to claim 36, wherein the second application-aware networking identifier is the same as the first application-aware networking identifier.

38. The method according to any one of claims 33 to 37, wherein the first application-aware networking identifier is carried in an option Option field in the first message.

39. The method according to claim 33, wherein the second device is a DHCP server, the first device is a network device, and the first host accesses a network via the network device.

40. The method according to claim 39, wherein the first message further comprises a first IP address, the first IP address corresponds to application-aware networking configuration information, the application-aware networking configuration information comprises a correspondence among the first application-aware networking identifier, a first interface, and a first traffic characteristic, and the application-aware networking configuration information indicates the network device to encapsulate the first application-aware networking identifier into traffic that is received from the interface and whose traffic characteristic matches the first traffic characteristic.

41. The method according to claim 39 or 40, wherein the application-aware networking configuration information is carried in an option Option field in the first message.

42. The method according to any one of claims 23 to 41, wherein the first message further comprises a key, and the key is used to verify whether the first application-aware networking identifier is tampered with.

43. The method according to any one of claims 23 to 42, wherein the first application-aware networking identifier comprises at least one of the following information: an application identifier APP GROUP ID, a user group identifier USER GROUP ID, a flow identifier FLOW ID, or a service level agreement SLA.

44. A communication device, wherein the communication device comprises a processor and a memory, wherein
the memory is configured to store instructions or a computer program; and
the processor is configured to execute the instructions or the computer program in the memory, so that the communication device performs the method according to any one of claims 1 to 22.

45. A communication device, wherein the communication device comprises a processor and a memory, wherein
the memory is configured to store instructions or a computer program; and
the processor is configured to execute the instructions or the computer program in the memory, so that the communication device performs the method according to any one of claims 23 to 43.

46. A communication system, comprising a first device and a second device, wherein
the first device is configured to perform the method according to any one of claims 1 to 22; and
the second device is configured to perform the method according to any one of claims 23 to 43.
